# EUROPEAN PATENT APPLICATION

(11) **EP 4 838 202 A1**
(43) Date of publication of application: **11.11.2026**
(21) Application number: 25175298.6
(22) Date of filing: 09.05.2025
(51) Int. Cl.: G01N 15/00, G01N 15/06

(54) **DEVICE AND METHOD FOR DETECTING CLOUD CONDENSATION NUCLEI ACTIVATION OF AEROSOL PARTICLES**

(71) Applicant: ETH Zurich, 8092 Zurich (CH)
(72) Inventor: KANJI, Zaminhussein, 8048 Zürich (CH); SAPKAL, Mayur, 8057 Zürich (CH); RÖSCH, Michael, 8196 Wil (CH)

(57) **Abstract**

A device (1) for detecting a cloud condensation nuclei activation of aerosol particles of a sample flow comprises a chamber (2) comprising at least one sample inlet (3) for receiving a sample flow (7) comprising aerosol particles and at least one sample outlet (4) for expelling the sample flow (7) from the chamber (2), a vapor source (6) configured to generate a supersaturation of vapor from a vaporizing fluid (8) in the chamber (2) and comprising at least a first wall element (9) and a second wall element (10) being arranged opposite to one another with respect to a vertical direction (Vc) of the chamber (2) running perpendicularly to a longitudinal direction (Lc) of the chamber (2), and a detection device (5) configured to detect aerosol particles and droplets being expelled through the sample outlet (4). The first wall element (9) and the second wall element (10) in each case comprise a cavity (15; 16) that is in each case configured to receive a temperature regulating fluid (17) for regulating a temperature of the first wall element (9) and a temperature of the second wall element (10), respectively, whereby a temperature gradient between the first wall element (9) and the second wall element (10) and the supersaturation of the vaporizing fluid in the chamber (2) is generatable to activate the aerosol particles.

## Description

### TECHNICAL FIELD

The present invention relates to a device for detecting a cloud condensation nuclei activation of aerosol particles according to claim 1, a method of manufacturing such a device according to claim 11, an arrangement for detecting a cloud condensation nuclei activation of aerosol particles comprising such a device according to claim 12, and a method of detecting cloud condensation nuclei activation of aerosol particles using such a device or arrangement according to claim 13.

### PRIOR ART

Aerosol particles serve as cloud condensation nuclei (CCN) for cloud droplet formation in the atmosphere. The key parameters determining aerosol CCN activity and ultimately cloud droplet formation under atmospheric water saturation include particle size and composition. Conventional Köhler theory can predict the development of cloud droplets by condensation of water vapour onto particles (Köhler, 1936), by combining the Kelvin effect and Raoult's law to estimate the saturation water vapor pressure above a curved aqueous solution surface. The capacity of aerosol particles to activate into cloud droplets is measured experimentally using Cloud Condensation Nuclei Counters (CCNCs), which detect the proportion of particles that develop into cloud droplets when exposed to water vapor at a pre-set supersaturation (SS). Early laboratory research revealed that common soluble inorganic compounds of atmospheric aerosols, such as ammonium sulphate and NaCl, satisfy Köhler theory to a considerable degree (Cruz and Pandis, 1997a). However, a poor agreement is found between observed versus predicted CCN concentrations in closure studies (i.e., [CCN]observed ≠ [CCN]predicted) (L. Kammermann et al. 2010;Whitehead et al., 2014; Pajunoja et al., 2015). Potential explanations for these discrepancies arise from the uncertainty in aerosol composition due to internally mixed complex in/organic aerosol (Lee et al., 2002; Murphy et al., 2006), the corresponding surface tension deviating from that of pure water, in particular if surface active species form part of the aerosol (Ovadnevaite et al., 2017). Non-idealities that result from real world aerosol need to be accounted for to accurately predict CCN concentrations (Renbaum-Wolff et al., 2016; Ovadnevaite et al., 2017). Gas phase partitioning into hygroscopic aerosol increases its mass (and size) and in turn its propensity to take up more water (or activate at lower SS). This so-called co-condensation effect of gas-phase semi-volatile organic compounds condensing with water vapor is dependent on relative humidity and temperature of the aerosol and surrounding environment (Topping et al., 2013).

To estimate the critical supersaturation (SScrit) for particles to activate to cloud droplets, two types of CCNCs are utilized in laboratory studies: streamwise thermal-gradient diffusion chamber and parallel plate thermal-gradient diffusion chambers (CFDC). The streamwise CCNC designed by Roberts and Nenes (2005) and commercially available from Droplet Measurement Technologies, Inc., achieves water supersaturation (SS) exploits the faster water vapour diffusion of water compared to air by maintaining a temperature gradient within the chamber that is established using thermoelectric heaters. The chamber is made of a cylindrical column with wetted interior surfaces as a source of water vapor. The aerosol and sheath flow are drawn from the same source at the same temperature, while the sheath flow is passed through a filter followed by a Nafion membrane to achieve 100% relative humidity (RH), which keeps the column moist. At the top of the column, where the aerosol enters, the temperature is typically set to 0-10 K above the sample temperature to be above the dew point of the sampled air. This elevated temperature is essential to prevent condensation and fog formation, as the sheath air is at 100% RH (Roberts and Nenes, 2005). In environments with substantial air conditioning, if the ambient temperature falls below the dew point of the sampled air, condensation can occur, leading to aerosol changes. As heating progresses down the column, the temperature at the bottom is significantly higher than at the top. The temperature gradient, aligned with the aerosol stream, exposes particles to elevated temperatures throughout their transit, potentially altering their composition, particularly for volatile and semi-volatile species which can repartition into the gas phase (Hu et al., 2018). Additionally, the wet column walls act as a sink for water-soluble semi-volatiles, thereby removing these compounds from the activation process. As a result, these compounds do not contribute to cloud droplet formation under the experimental conditions, contrasting with their behavior in ambient environments (Romakkaniemi et al., 2014). Occurrence of this process has been estimated to induce considerable errors in the determination of the particle CCN ability (Hu et al., 2018; Topping and McFiggans, 2012). For instance, Hu et al., (2018) investigated the CCN behavior of (NH₄)₂SO₄ particles after exposure to propylene glycol (PG, PG = 0.1) and water (aw = 0.9). As the temperature difference in the CCNC column increased, the ratio of organics in the outlet was lower than that in the inlet, indicating the evaporation of organics. Consequently, they observed no significant changes in the kappa values or SScrit for (NH₄)₂SO₄ particles, whether measured with or without the presence of organic vapour. Additionally, the operational range of the streamwise CCNC is between 0.13% and 3% SS, with the lower limit constrained by the 1 µm droplet detection threshold, as the DMT CCNC utilizes this size as the criterion for identifying cloud droplets. Attempting to study the activation lower than the supersaturation below 0.13% is challenging for two main reasons. According to Köhler theory, as the required critical supersaturation for activation decreases the dry particle diameter increases. Consequently, operating at lower supersaturation levels (than 0.13%) would necessitate a detection threshold greater than 1 µm to differentiate activated droplets from larger, unactivated particles. For instance, results from the E-AIM (IV) model indicate that an ammonium sulfate particle with a dry diameter of 191.4 nm would grow to approximately 1.4 µm at a relative humidity of 99.9% (saturation ratio, Sw = 0.99) (Wexler and Clegg, 2002;Clegg et al., 2013). This implies that the threshold size must be at least greater than 1.5 µm to classify the particle as a cloud droplet. Additionally, particles activated at lower supersaturations exhibit slower growth rates, as the supersaturation-the primary driver of post-activation growth-is reduced compared to conditions above 0.13%. As a result, particles would require extended residence times to surpass the 1 µm detection threshold, with even longer residence times needed if the detection threshold were set higher than 1 µm. However, since the residence time in the streamwise CCNC is fixed for a given flow rate, operating below 0.13% supersaturation is impractical and does not allow for reliable cloud droplet detection. Moreover, according to the DMT CCNC manual, if particle concentrations exceed 6000 particles/cm³, the supersaturation lower limit considered as 0.2% to avoid counting biases, which arise from the growth kinetics of the particles. The streamwise CCNC therefore can present limitations to study atmospherically relevant particle sizes and different compositions. For example, as per the Köhler theory, the critical SS for 111nm ammonium sulphate particles is 0.13%, while for 84 nm particles it is 0.2%. As a result, studying particles larger than 111 nm in the streamwise CCNC may not be feasible or reliable. The presence of surfactants and the co-condensation of semi-volatile compounds can reduce the critical supersaturation required for activation at a given particle size, compared to conditions where these compounds and processes are absent (Nozière et al., 2014; Gérard et al., 2016; Topping & McFiggans, 2012). This suggests that a streamwise CCNC may be unable to detect the activation of such particles mixed with surfactants or mixed particle with (semi) volatile organics components or processes like co-condensation occurring in the atmosphere.

CFDCs work by keeping two parallel plates at different temperatures, resulting in a linear temperature gradient between the plates. The inner surfaces of the plates are wetted such that the air near the walls becomes water-saturated, resulting in water SS (SSw) region between the plates (Kumar et al., 2003; Jiusto, 1967). In the CFDCs, aerosol flow is typically injected into the center between the two plates. If the temperature of both plates is adjusted simultaneously at a constant rate, the particles experience a consistent mean temperature throughout their transit. However, in earlier CCNC designs, this mean temperature was generally higher than the ambient temperature. Kumar et al. (2003) reported that the mean temperature of the chamber was maintained approximately 2°C above ambient temperature to mitigate evaporative losses of activated droplets before their detection by an Aerosol Particle Sizer (APS 3321, TSI Inc.). Additionally, the sheath flow was humidified to 100% RH by passing it through a fritted water bubbler before entering the chamber, which prolonged the wetting of the filter paper. However, humidifying the sheath flow poses limitations when attempting to achieve supersaturation (SS) at lower temperatures. Since the sheath flow is fully saturated at room or experimental temperature, cooling the plates below this level can lead to condensation of the sheath flow on the plates. This condensation will not only disrupt the established supersaturation profile by introducing excess vapor but may also result in the formation of droplets that could be sampled by the OPC. These unintended droplets may be mistakenly counted as activated particles, introducing potential counting biases. Collectively, these factors could compromise the reliability of critical supersaturation measurements and impact the accuracy of activation determinations. So, far CFDC measurements are limited to supersaturations larger than 0.1%, given the long growth time required at lower SS, so droplets can be distinguished from interstitial aerosol (Nenes et al., 2001).

Dynamic spectrometers utilize a series of parallel warm and cold plates to create a variable supersaturation field, exposing aerosol samples to this field while inferring the CCN spectrum from the droplet size distribution measured at the outlet. Dynamic spectrometers have thus far reported measurable SScrit ranges from 0.01% to 1%. However, compared to CFDCs, dynamic spectrometers employ a fundamentally different design, in terms of particle activation and size measurement (Hudson, 1989). These instruments generate varying SS profiles through sequential heating in different sections and infer the CCN spectrum based on the droplet size distribution at the instrument outlet. A significant challenge arises when calibration curves derived from pure salt aerosols are used to infer ambient CCN spectra. Matching the calibration curve is often not satisfied for aerosols containing surfactants or slightly soluble materials, leading to uncertainties in measurement accuracy (Nenes et al., 2001).

In summary, many CCN counters have been developed over the years, as discussed, few examples above, based on various designs and operating principles, or in some cases, the same operating principle with differing detection methods. Notably, none of these instruments can generate SS at lower temperatures (<10°C), which are not representative of natural cloud formation processes that occur at lower temperatures. Addressing these limitations is critical, as processes like organic repartitioning into the gas phase due to the higher temperature can significantly underestimate cloud droplet number concentrations compared to scenarios with co-condensation. According to Topping et al. (2013), the net cooling influence on global albedo, resulting from a 40%, 20%, and 10% enhancement in cloud droplet number concentration, is estimated to be 1.8 Wm⁻², 0.98 Wm⁻², and 0.51 Wm⁻², respectively. While some instruments, like CFDCs, can operate slightly above ambient temperature, they often face difficulties in achieving SS below 0.1%. This limitation restricts their ability to measure CCN activity over the full range of particle sizes that are relevant for the atmosphere. The limitations of existing CCNCs to generate supersaturation over a wide range and at lower temperatures reveals a critical gap.

### SUMMARY OF THE INVENTION

It is an object of the present invention to provide an improved device for detecting a cloud condensation nuclei activation of aerosol particles. In particular, it is an object of the present invention to provide a device for detecting cloud condensation nuclei activation of aerosol particles configured to generate supersaturation at low temperatures and/or low levels of supersaturation.

This object is achieved with a device according to claim 1. That is, a device for detecting a cloud condensation nuclei activation of aerosol particles of a sample flow is provided, wherein the device comprises a chamber, a vapor source, and a detection device. The chamber defines a longitudinal direction and comprises at least one sample inlet for receiving a sample flow comprising aerosol particles and at least one sample outlet for expelling the sample flow from the chamber. The vapor source is configured to generate a supersaturation of vapor from a vaporizing fluid in the chamber, whereby aerosol particles are activatable to become cloud condensation nuclei and, from the cloud condensation nuclei, droplets are generatable. The vapor source comprises at least a first wall element and a second wall element being arranged opposite to one another with respect to a vertical direction of the chamber running perpendicularly to the longitudinal direction of the chamber. The detection device is configured to detect aerosol particles and droplets being expelled through the sample outlet. The first wall element and the second wall element in each case comprise a cavity. The cavity of the first wall element and the cavity of the second wall element are in each case configured to receive a temperature regulating fluid for regulating a temperature of the first wall element and a temperature of the second wall element, respectively, whereby a temperature gradient between the first wall element and the second wall element and the supersaturation of the vaporizing fluid in the chamber is generatable to activate the aerosol particles.

Cloud Condensation Nuclei (CCN) are aerosol particles that successfully initiate the condensation of a vaporizing fluid such as water and/or surrounding gases such as organics and/or any other condensable gas, for instance water vapor and/or organics and/or any other condensable gas, growing into significantly larger liquid fluid such as droplets known as cloud droplets. In a given supersaturation environment, only certain aerosol particles have the ability to become such droplets-these are considered activated particles. A Cloud Condensation Nuclei Counter (CCNC) is commonly used to create a controlled supersaturation environment, allowing particles to activate. Those aerosol particles that do not form droplets remain as unactivated particles.

The detection device of the device according to the invention is preferably configured to detect both, the formed droplets and the unactivated aerosol particles that did not become droplets. By comparing a number of activated droplets to a total number of aerosol particles being supplied into the chamber, a fraction of activated particles can be determined, providing a measure of cloud condensation nuclei. Hence, the device according to the invention is preferably configured to determine a faction of activated particles and consequently a cloud condensation nuclei activation

The first wall element and the second wall element in each case preferably comprises an outer surface and an opposed inner surface, wherein the inner surface of the first wall element and the inner surface of the second wall element face one another. The cavity is preferably formed at least partially between the outer surface and the inner surface of the respective wall element.

The device is preferably configured and arranged such, that the longitudinal direction of the chamber extends along a horizontal direction of the device when seen in an installed state of the device and in the event that the device is in a non-tilted state, see further below. A vertical direction of the device preferably runs perpendicularly to the horizontal direction of the device when seen in the installed state of the device and in the event that the device is in the non-tilted state. The installed state of the device is preferably understood as the state in which the device has been positioned, assembled or configured within its intended operational environment such as being arranged on a surface or table top, and wherein it is capable of detecting the cloud condensation nuclei activation of aerosol particles of the sample flow. Thus, the device can be seen as a so-called Horizontal Cloud Condensation Nuclei counter (HCCNC).

The first wall element preferably comprises at least one fluid inlet for receiving the vaporizing fluid and at least one fluid outlet for supplying the vaporizing fluid towards an interior of the chamber. The fluid inlet of the first wall element preferably is provided on an outer surface of the first wall element and/or the fluid outlet of the first wall element preferably is provided on an inner surface of the first wall element. Various arrangements and/or designs of the fluid inlets and fluid outlets are conceivable. For instance, the fluid inlets could be ports connectors that protrude from the wall elements, for instance from the top surfaces of the wall elements, and the fluid outlets could be perforations being formed in the inner surfaces of the wall elements. Another example are fluid outlets in the form of sprinklers that are configured to sprinkle the vaporizing fluid towards the interior of the chamber, etc.

The fluid inlet of the first wall element is preferably in fluid communication with the fluid outlet of the first wall element via at least one channel extending through the first wall element. As will be outlined below, the fluid outlets are preferably arranged and configured such as to wet the inner surfaces of the first wall element and the second wall element, in particular at least one fluid distributing element being arranged on the inner surfaces of the first and second wall element. The device is preferably configured and arranged such, that the vaporizing fluid is distributed from the fluid outlets to the fluid distributing elements by wicking. Thereafter, the vaporizing fluid preferably drops by gravity from the first wall element onto the second wall element. In addition, and as will be explained in greater detail below, the second wall element preferably has at least one channel configured to collect and/or remove excess vaporizing fluid from the chamber preferably via at least one drainage port. Hence, the vaporizing fluid is preferably drained out of the second wall element.

An inner surface of the first wall element and an inner surface of the second wall element preferably comprise in each case at least one fluid distributing element. The fluid distributing elements are preferably configured to distribute the vaporizing fluid at least partially along the inner surface of the first wall element and of the second wall element, respectively. Additionally or alternatively, the fluid distributing elements are preferably in direct contact with the inner surfaces and/or are configured to wet the inner surfaces of the first wall element and of the second wall element, respectively. Additionally or alternatively, the fluid distributing elements are preferably at least one of: a filter paper, a filter membrane, or a filter sheet. The fluid distributing elements are preferably configured to adhere to the inner surfaces of the first and second wall elements. For instance, the fluid distributing elements could be self-adhering borosilicate glass microfibre filter papers, polytetrafluoroethylene (PTFE) filter membranes, polypropylene microfiber filter sheets, cellulose nitrate filter paper for instance with hydrophilic treatment, etc. A thickness of the fluid distributing elements along a thickness direction of the fluid distributing elements is preferably in the micrometer range, such as about 1 micrometer.

The first wall element and the second wall element are preferably integral parts of the chamber and/or at least partially delimit the chamber. Additionally or alternatively, the second wall element preferably comprises at least one channel configured to collect and/or remove excess vaporizing fluid from the chamber preferably via at least one drainage port. The channel preferably is provided on the inner surface of the second wall element and/or the drainage port preferably is provided on the outer surface and/or a side surface of the second wall element.

At least one filtration device could be in connection with the drainage port in order to filter and thereafter recirculate the vaporizing fluid in order to reduce waste. For instance, the filtration device could be a sediment filter that is configured to filter particles, an activated carbon filter for filtering organics, or an ultrafiltration membrane for fine impurities. Such filtration devices are well-known in the art. After filtration of the vaporizing fluid, the vaporizing fluid can be re-supplied to the first and second wall elements.

The device preferably further comprises a spacer element being arranged between the first wall element and the second wall element with respect to the vertical direction of the chamber. The spacer element preferably is an integral part of the chamber and/or partially delimits the chamber. Additionally or alternatively, the spacer element preferably thermally insulates the first wall element and the second wall element from one another. Additionally or alternatively, the sample inlet and/or the sample outlet are preferably provided in the spacer element. The first wall element and/or the second wall element and/or the spacer element are preferably arranged parallel to one another with respect to the vertical direction of the chamber. In other words, the first wall element, the spacer element, and the second wall element are preferably arranged above one another with respect to the vertical direction of the chamber. The first wall element, the spacer element and the second wall element are preferably connected to one another via mechanical fastening elements such as nuts, bolts, Toggle clamps, cam locks, quarter-turn fasteners, quick-release latches, etc. Additionally or alternatively, the first wall element, the spacer element and the second wall element can be connected to one another via at least one of pneumatic, hydraulic or magnetic clamping. That is, the first wall element, the spacer element, and the second wall element are preferably releasably connected to one another. However, it is likewise conceivable that the first wall element, the spacer element and the second element are permanently connected to one another, for instance via adhesives. At least one sealing element such as an O-ring can be arranged between the first wall element and the spacer element and/or between the spacer element and the second wall element. Preferably, the first wall element, the second wall element and the spacer element have a same shape and/or geometric expansion and/or outer contour. However, it is likewise conceivable that these components have a different shape. For instance, a shape of the spacer element could be different from the shapes of the wall elements. In any case, it is preferred that the outer surfaces of the first wall element, the spacer element and the second wall element are flush with one another. The spacer element preferably serves the purpose of, inter alia, spacing the first wall element and the second wall element from one another with respect to the vertical direction of the chamber. As such, it is preferred that the spacer element comprises a through-opening that extends through the spacer element with respect to the vertical direction of the chamber. The through-opening of the spacer element preferably at least partially provides the interior of the chamber. The sample inlet and/or the sample outlet preferably correspond to an aperture being formed in the spacer element.

The first wall element and/or the second wall element are preferably thermally conducting and/or comprise or consist of at least one metal compound such as a metal alloy. For example, the first and second wall elements could comprise or consist of an aluminium alloy, a copper alloy, a titanium alloy, an iron alloy, or a nickel alloy such as AlSi10Mg, stainless steel (e.g., 316L), or Inconel 625. Other compounds are however likewise conceivable. The spacer element is preferably thermally non-conducting and/or preferably comprises or consists of at least one polymer, in particular at least one thermoplastic polymer such as at least one of polyvinylidene fluoride (PVDF), polytetrafluoroethylene (PTFE), or polyetheretherketone (PEEK). The first and second wall elements and the spacer element can have various dimensions. The dimensions are preferably set in accordance with a desired particle residence time in the chamber, flow rate conditions, etc. In particular, the dimensions are preferably adjusted to increase or decrease a particle residence time in the chamber and flow rate conditions to ensure turbulence remains minimal. For example, conceivable dimensions are 410 mm (L) x 210 mm (W) x 13 mm (H).

The sample inlet is preferably arranged and/or configured to supply the sample flow along an inlet direction running perpendicularly to the longitudinal direction and/or to the vertical direction of the chamber. Additionally or alternatively, two or more sample inlets are preferably provided at a distance from one another such that the sample flow is injectable into the chamber at different locations preferably with respect to the longitudinal direction of the chamber. Additionally or alternatively, at least one injector device configured to inject the sample flow along an injection direction is preferably at least partially arrangeable in the sample inlet. The injector device preferably is removably arranged in the sample inlet. The chamber preferably comprises a proximal end and a distal end, wherein the longitudinal direction of the chamber extends from the proximal end towards the distal end. As such, it is preferred that the first wall element, the second wall element and the spacer element preferably likewise comprise in each case a proximal end and a distal end, wherein said proximal ends provide the proximal end of the chamber and said distal ends provide the distal end of the chamber. The sample outlet is preferably provided in the distal end of the chamber, in particular in the distal end of the spacer element. Two or more sample inlets are preferably provided, wherein a distance between successive sample inlets can be the same or different from one another. The two or more sample inlets are preferably arranged at a distance from one another such that the sample flow can be supplied at different locations into the chamber. To this end said sample inlets are preferably arranged at a distance from one another with respect to the longitudinal direction of the chamber. In particular, the one or more sample inlets can be provided in an intermediate region being located between the proximal end and the distal end of the chamber or of the spacer element, respectively. Moreover, the sample inlets can be arranged on only one side of the chamber or of the spacer element or on both sides of the chamber or of the spacer element. The two or more sample inlets are preferably provided in the spacer element, preferably in the form of the previously mentioned apertures. In the event of two or more sample inlets, it is preferred that only one of the sample inlets is used for receiving the sample flow, wherein the other sample inlets are sealed with a sealing element such as a sealing plug. The sealing plug can be manually insertable and removable from the sample inlet. Moreover, the sealing plug can be preloaded into the sample inlet such as spring-loaded.

Spring-loaded sealing plugs ensure a tight seal of the unused sample inlets.

The sample flow is preferably injected into the chamber via at least one injector device. The injector device is preferably at least partially arranged in the sample inlet. To this end it is particularly preferred that the injector device is removably arranged in the sample inlet and, in the event of two or more sample inlets, can be mounted in any of the two or more sample inlets. That is, the injector device can be mounted on different sample inlets, for instance closer to an upstream end (i.e. to the most proximal end inlet) of the chamber and progressively moving towards a downstream end (i.e. to the most distal end inlet) of the chamber. If the injector device is mounted at the upstream most sample inlet (i.e. to the most proximal end inlet), the sample flow will have the highest residence time in the chamber, and if it is mounted at the downstream most end (i.e. to the most distal end inlet) then the residence time of the sample flow will be lower. The injector device is preferably configured to inject the sample flow along an injection direction. Said injection direction preferably runs parallel to the inlet direction of the sample inlet and/or perpendicularly to the longitudinal direction of the chamber and/or perpendicularly to the vertical direction of the chamber. Furthermore, the injector device preferably has at least one slit or opening that is arranged and/or configured such that the sample flow, after being injected into the chamber, is flowing along the longitudinal direction of the chamber. Said slit or opening is preferably designed parallel to the transverse direction of the chamber. That is, initially, the sample flow is preferably introduced into the injector device in the injection direction. However, the slit or opening present on the injector device allows the sample flow to then propagate along the longitudinal direction of the chamber. The injector device preferably has an elongated shape and/or has the shape of a tube or the like. Additionally or alternatively, the injector device preferably comprises or consists of at least one metal compound such as stainless steel. Additionally or alternatively, an internal diameter of the injector device is in the millimeter range such as between 1 millimeter and 10 millimeter, for instance about 5 millimeter. Additionally or alternatively, a length of the injector device when seen along the injection direction is preferably between 10 millimeter and 1000 millimeter, such as between 100 and 300 millimeter, for instance about 250 millimeter. The slit or opening on the injector device preferably has rectangular shape. A length and width of the slit or opening on the injector device is preferably between 10-150 millimeter and 0.1-0.5 milimeter, for instance about 75 and 0.4 millimeter. The injector device is preferably in fluid communication, in particular in fluid connection, with at least one sample supplying device. The sample supplying device preferably comprises an atomizer that is configured to generate an aerosol of a sample, i.e. the sample comprising aerosol particles, or connected to ambient air in order to measure the CCN activity of atmospheric aerosol, for instance. That is, and as will be explained in greater detail further below, the device for detecting the cloud condensation nuclei activation according to the invention can be part of an arrangement for detecting the cloud condensation nuclei activation, and wherein said arrangement comprises further components such as a sample supplying device.

The sample flow can be a wet aerosol sample flow. In this case it is further preferred if the sample supplying device is in fluid communication, in particular in fluid connection with at least one drying device such as a diffusion dryer, wherein the wet aerosol passes through the drying device before being supplied, in particular injected, into the chamber. That is, the arrangement preferably further comprises at least one drying device. The sample supplying device and/or the drying device can be in fluid communication, in particular in fluid connection, with at least one particle sizer configured to measure and/or select a particle size of the aerosol particles such as a differential mobility analyzer. In this case it is preferred that the aerosol sample flow passes through the particle sizer before being supplied, in particular injected, into the chamber. That is, the arrangement preferably further comprises at least one particle sizer. The sample supplying device and/or the drying device can be in fluid communication, in particular in fluid connection, with one particle/aerosol counter configured to count aerosol particles. In this case it is preferred that the aerosol sample flow splits in two and one part passes through the particle counter and other part being supplied, in particular injected, into the chamber. However, the inclusion of the particle/aerosol counter is not essential for the operation of the system.

The particle/aerosol counter is preferably configured to provide the total number of aerosol particles, while the detection device is preferably configured to detect the number of droplets present, in particular the activated particles for instance big in size such as >1 micrometer. The ratio of these two measurements, i.e. activated particles/total aerosol fed, yields the activated fraction.

The first wall element and the second wall element in each case preferably comprises one or more fluid ports being in fluid connection with the cavity and being configured to supply the temperature regulating fluid into the cavity of the first wall element and of the second wall element, respectively. Additionally or alternatively, the device preferably further comprises at least one fluid distribution element being configured to distribute the temperature regulating fluid into the cavity of the first wall element and/or of the second wall element. The fluid distribution element preferably is a manifold being configured to distribute the temperature regulating fluid among two or more fluid ports of the first wall element and/or of the second wall element. Additionally or alternatively, an internal diameter of the fluid distribution element preferably decreases along a direction along which the temperature regulating fluid is flowable when being distributed into the cavity of the first wall element and/or of the second wall element. The first wall element preferably comprises one or more fluid ports being in fluid connection with the cavity of the first wall element and being configured to supply the temperature regulating fluid into the cavity of the first wall element. The one or more fluid ports are preferably provided on the outer surface of the first wall element. Likewise, the second wall element preferably comprises one or more fluid ports being in fluid connection with the cavity of the second wall element and being configured to supply the temperature regulating fluid into the cavity of the second wall element. The one or more fluid ports are preferably provided on the outer surface of the second wall element. The fluid ports of the first wall element and of the second wall element are preferably provided in a proximal end region of the first wall element and the second wall element, respectively. The fluid ports of the first wall element and of the second wall element preferably extend or merge into the cavity of the first wall element and the second wall element, respectively. The first wall element and the second wall element can each have a bevelled edge in a region where the fluid ports expand or merge into the cavities, preferably in a proximal end region of the cavity. The bevelled edge preferably is inclined with respect to the longitudinal direction of the chamber. The bevelled edge preferably serves the purpose of distributing the temperature regulating fluid uniformly in the respective cavity. In particular, the bevelled edge preferably extends from the proximal end of the cavity in the direction of a distal end of the cavity and/or from the outer surface of the first wall element and of the second wall element in the direction of the inner surface of the first wall element and the second wall element, respectively.

The device can comprise at least one fluid distribution element being configured to distribute the temperature regulating fluid into the cavity of the first wall element and/or of the second wall element. The fluid distribution element preferably is a manifold being configured to distribute the temperature regulating fluid among two or more fluid ports of the first wall element and of the second wall element, respectively. The fluid distribution element preferably comprises at least one inlet port being connectable to at least one temperature regulating fluid supplying device and at least one outlet port being connectable to the fluid ports of the first and second wall elements that are in connection via an internal cavity. Hence, the arrangement preferably comprises at least one temperature regulating fluid supplying device. The temperature regulating fluid supplying device preferably is a commercially available chiller. In particular, two temperature regulating fluid supplying devices such as chillers, in particular recirculating chillers, can be provided. The fluid distribution element preferably is a chiller manifold. Hence, the temperature regulating fluid is preferably distributed to the first and second wall elements through a chiller manifold. An internal diameter of the fluid distribution element, in particular of the internal cavity, preferably decreases along a direction along which the temperature regulating fluid is flowable from the inlet port of the fluid distribution element towards the outlet port of the fluid distribution element when being distributed into the cavity of the first wall element and of the second wall element, respectively. To this end it is particularly preferred that the internal diameter of the fluid distribution element gradually decreases along the direction along which the temperature regulating fluid is flowable. Said decreasing internal diameter preferably serves the purpose of ensuring an even distribution of the temperature regulating fluid across all fluid ports of the first wall element and the second wall element, respectively. An effective length of the fluid distribution elements, in particular of the internal cavity of the manifolds, is preferably in the millimeter range such as 200 millimeter. Additionally or alternatively, the internal diameter of preferably decreases from a major diameter of 10 to 20 millimeter such as 16 mm to a minor diameter of 5 to 10 millimeter such as 8.2 mm and/or by about 50 % over a length of the internal cavity. The length and internal dimensions of the fluid distribution element can be adjusted as needed, provided they effectively ensure the even distribution of the temperature-regulating fluid across all fluid ports of the first wall element and the second wall element. The fluid distribution element can have various shapes, such as a cylindrical or tubular shape, a square shape, etc., as long as an equal distribution of the temperature regulating fluid is ensured. Preferably, two fluid distribution elements are provided, one of which being in fluid communication with the cavity of the first wall element and the other of which being in fluid communication with the cavity of the second wall element. Furthermore, one of the fluid distribution elements can be connected to one of the temperature regulating fluid supplying devices such as one of the chillers. However, it should be noted that the temperature regulating fluid could be directed to each fluid port without a fluid distribution element or manifold, respectively.

The chamber preferably comprises at least one sheath inlet for receiving at least one sheath fluid flow and at least one sheath outlet for expelling the sheath fluid flow from the chamber. The sheath inlet and the sheath outlet are preferably arranged such that the sheath fluid flow is flowable within the chamber along a sheath flowing direction being parallel to the longitudinal direction of the chamber. Additionally or alternatively, the sheath inlet is preferably arranged in a proximal end region of the chamber and the sheath outlet is arranged in a distal end region of the chamber. Additionally or alternatively, the chamber preferably comprises at least one mesh element through which the sheath fluid flow is flowable after being received in the chamber through the sheath inlet, and wherein the mesh element is configured to control and/or direct a sheath flowing direction of the sheath fluid flow. Additionally or alternatively, the device preferably comprises at least one heat sink element being configured to dissipate heat from the sheath fluid flow, the sheath inlet preferably being configured such that the sheath fluid flow is directed to the heat sink element. That is, a sheath fluid flow is preferably introducible into the chamber, wherein said sheath fluid flow flows along a sheath flowing direction from at least one sheath inlet to at least one sheath outlet. The sheath inlet is preferably provided in the proximal end region of the chamber, in particular in the proximal end of the spacer element. In fact, two or more sheath inlets can be present, wherein said two or more sheath inlets are preferably arranged at a distance from one another with respect to a transversal direction of the chamber running perpendicularly to the longitudinal direction of the chamber and to the vertical direction of the chamber. To this end it is particularly preferred that two or more sheath inlets are provided in the proximal end of the spacer element. The sheath outlet is preferably provided in the distal end region of the chamber, in particular in the distal end of the spacer element. The at least one sheath inlet and/or the at least one sheath outlet are preferably apertures formed in the chamber, in particular in the spacer element. The sheath outlet can be provided by the sample outlet, i.e. the outlet for the sheath fluid flow and for the sample flow can be the same. The sheath fluid flow is preferably provided from at least one sheath fluid supplying device. That is, the arrangement preferably further comprises at least one sheath fluid supplying device being in fluid communication with the at least one sheath inlet. As will be explained in greater detail further below, the sheath fluid flow preferably is gaseous and/or dry. To this end it is conceivable that the sheath fluid flow originates from a sheath supplying device in the form of a particle free dry gas such as particle free nitrogen, dry argon or dry helium, or a source of compressed gas that has been purged of moisture. Various drying methods are conceivable and are well-known in the art such as desiccant dryers, diffusion dryers, or Nafion dryers that are configured to remove moisture from the sheath fluid. Furthermore, it is preferred that at least one filter device is used for filtering the sheath fluid. For instance, a sheath fluid in the form of compressed air could be passed through a filter device like HEPA. Moreover, the sheath fluid supplying device could be configured as a closed-loop recirculation system, wherein the sheath fluid being expelled from the chamber is re-utilized. Such a recirculation system minimizes waste and reduces long-term operating expenses.

The chamber can comprise at least one mesh element through which the sheath fluid flow is flowable after being received in the chamber through the sheath inlet. The mesh element is preferably configured to control and/or direct a sheath flowing direction of the sheath fluid flow. As such, it preferably serves the purpose of stabilizing the fluid flow and minimizing turbulence of the flow of the sheath fluid. As such, it is preferred that the mesh element is arranged in a region of the sheath inlet and thus preferably in the proximal end region of the chamber. The mesh element can be a commercially available mesh element and/or that is well-known in the art. Various mesh elements are conceivable, such as a mesh element composed of stainless-steel wire and/or having a mesh size of 250 mesh per inch and a wire diameter of 0.04 mm. A dimension of the mesh element is preferably such that is spans a full width of the chamber along the transverse direction of the chamber and a full height of the chamber along the vertical direction of the chamber. The mesh element is preferably in connection with the first wall element, the second wall element and the spacer element. In particular, the inner surfaces of the first wall element and the second wall element and the spacer element preferably comprise grooves that are aligned. During assembly, the mesh element can be positioned within a space created by the aligned grooves of these components. Upon tightening or fastening these components, the mesh element becomes secured within these grooves, effectively fixing it in place. Conversely, the mesh element can be removed from the grooves when the components are dismantled.

The device preferably comprises at least one heat sink element being configured to dissipate heat from the sheath flow. The heat sink element is preferably thermally connected to the device, in particular to the second wall element. The heat sink element is preferably made of at least one material having a high thermal conductivity and/or comprising or consisting of at least one of aluminium or copper or copper-aluminium hybrid or graphite and composite materials or stainless steel or titanium, etc. As mentioned earlier, the heat sink element preferably serves the purpose of dissipating heat from the sheath flow. To this end it is preferred that the heat sink element is arranged on the second wall element, in particular on the inner surface of the second wall element such as partially being inserted into a recess formed in the inner surface of the second wall element. As such, the heat sink element can utilize the lower temperature of the second wall element to cool itself, and this lower temperature heat sink element then acts to reduce the temperature of the sheath flow.

The device preferably further comprises at least one tilting device being configured to tilt the device along at least one tilting axis preferably running parallel to the longitudinal direction of the chamber in a non-tilted state of the device and/or running parallel to a transverse direction of the chamber running perpendicularly to the longitudinal direction of the chamber and the vertical direction of the chamber in a non-tilted state of the device. The tilting device is preferably configured to tilt the device such that the vaporizing fluid is distributed across the first and second wall elements, in particular across the inner surfaces of the first and second wall element and/or across the fluid distributing elements. Additionally or alternatively, the tilting device preferably comprises an actuator, in particular a linear actuator. Hence, the device can comprise at least one tilting device being configured to tilt the device along at least one tilting axis that preferably runs parallel to the longitudinal direction of the chamber in a non-tilted state of the device and/or that preferably runs along a transverse direction of the chamber running perpendicularly to the longitudinal direction of the chamber and the vertical direction of the chamber in a non-tilted state of the device. The transverse direction of the chamber can be understood as a width direction of the chamber. The non-tilted state of the device preferably corresponds to a state where the longitudinal direction of the chamber runs parallel to the horizontal direction of the device and wherein the vertical direction of the chamber runs parallel to the vertical direction of the device. The tilted state of the device preferably corresponds to a state wherein the device is tilted about the tilting axis by at least 5°, preferably by at least 20° such as 25°. In other words, in the tilted state of the device the device is preferably no longer arranged horizontally. In the tilted state, the device is preferably oriented at an angle such, that the fluid outlet of the first wall element and the drainage port being vertically displaced with respect to the vertical direction of the chamber, with the fluid outlet being positioned at a higher elevation and the drainage port being situated at a lower elevation with respect to the vertical direction. For instance, the vaporizing fluid can be supplied towards the interior of the chamber along the longitudinal direction of the chamber being tilted upwards so that the vaporizing fluid is distributed along the inner surface of the first wall element and the vaporizing fluid can furthermore drip onto the second wall element, and because of the tilt the vaporizing fluid can in addition drain out of the drainage port. The tilting device preferably comprises an actuator, in particular a linear actuator. However, other tilting devices are likewise conceivable, such as a manual tilt adjustment with locking hinges, a stepper motor-based tilting mechanisms, or an adjustable incline platform with hydraulic controls. The actuator is preferably in connection with a tilting frame. That is, the tilting device preferably comprise a tilting frame, wherein the actuator is configured to exert a lifting or lowering force on the tilting frame, in particular to a lateral side of the tilting frame, such that the tilting frame acts as a hinge or pivot. One or more components of the device, in particular of the chamber such as at least one of the first wall element, the second wall element or the spacer element and/or additional components such as the heat sink elements, etc., are preferably mounted on the tilting frame. For example, a manual tilt adjustment device can comprise one or more hinges as the pivot, with a lever or screw enabling manual lifting of one frame side, secured by a locking mechanism. Similarly, a hydraulic tilt adjustment device could employ hinges as the pivot, where hydraulic cylinders, controlled by a pump and valves, for instance, extend or retract to adjust a tilt angle of the tilting frame. Various attachment points for each mechanism are conceivable and are preferably determined by the frame's design and the chosen tilting method.

The sample outlet is preferably provided in a distal end region of the chamber, and wherein a shape of the distal end region of the chamber is preferably configured to focus the sample flow being expelled from the sample outlet towards the detection device. Additionally or alternatively, the device preferably further comprises at least one shielding element being arranged between the sample outlet and the detection device and being configured to shield the sample flow being expelled from the sample outlet. That is, the distal end region of the chamber is preferably shaped to focus the sample flow being expelled from the sample outlet towards the detection device. For example, the distal end region of the chamber can be cone shaped. An apex of the cone preferably provides the distal end of the chamber, and wherein the sample outlet is preferably provided in the apex of the cone. It should be noted that other shapes are likewise conceivable for focusing the sample flow towards the detection device. To this end it is preferred that the distal end region of the chamber defines an angle that ensures that the sample flow being expelled from the sample outlet can be focused onto the detection device. The same applies to the sheath fluid flow being expelled from the chamber. As mentioned earlier, the sheath fluid flow is preferably expelled from a sheath outlet that is preferably located in the distal end region of the chamber and in particular corresponds to the sample outlet. The distal end of the chamber therefore preferably has a shape that is configured so that the sheath fluid flow is also focused onto the detection device. In other words, the shape of the distal end of the chamber is preferably such that it focuses both the sample flow and the sheath fluid flow towards the detection device, while ensuring that a total flow of the sample flow and the sheath fluid flow merges smoothly while avoiding turbulence.

In order to protect the expelled sample flow comprising the cloud condensation nuclei and unactivated aerosol particles from environmental conditions the device can comprise at least one shielding element being arranged between the sample outlet and the detection device and being configured to shield the sample flow and preferably also the sheath fluid flow being expelled from the sample outlet and the sheath outlet, respectively. The shielding element preferably encloses the expelled sample flow and preferably also the sheath fluid flow.

The detection device is configured to detect the aerosol particles being expelled through the sample outlet and preferably corresponds to a commercially available detection device that is well-known in the art. For instance, the detection device 5 can be an optical particle detector (OPC) configured to measure and count a number of the aerosol particles by using light scattering technology. For instance, an OPC could be used that is equipped with a 780 nanometer and 35 mWatt photodiode laser. The detection device preferably comprises a signal processing unit such as onboard electronics being configured to size and categorize the detected aerosol particles into two or more size bins, for instance into four size bins. For instance, a first size bin could comprise aerosol particles having a size being larger than 0.3 micrometer and a second size bin could comprise particles having a size being larger than 10 micrometer. The size bins preferably are signal bins. For example, there could be a large scattering signal bin in bin 5 and a small scattering signal bin in bin 1. The small scattering could correspond to smaller droplets and unactivated aerosol particles (e.g. > 0.3 um) and the large scattering to larger droplets and activated aerosol particles (e.g.> 1um). To this end it is particularly preferred that the detection device is calibrated to know how much scattering is produced from a given particle or droplet size, such that the scattering signal corresponds or is associated with a particle or droplet size range. A distance between the sample outlet and if applicable of the sheath outlet and the detection device is preferably 20 millimeter or less, such as 15 millimeter or less, or 10 millimeter or less. To reduce the distance further, in particular less than 10 millimeter such as less than 5 millimeter, a direct coupling between the sample outlet and a detection inlet of the detection device could be provided. That is, the detection device preferably comprises a detection inlet through which the droplets and the unactivated particles can enter the detection device. To this end it is particularly preferred that the detection inlet is directly inserted into the sample outlet of the chamber. This reduces the transit time of the droplets and unactivated particles between the chamber and the detection device, thus allowing minimal modification of the droplet size due to evaporation and temperature changes.

In another aspect, a method of manufacturing a device for detecting a cloud condensation nuclei activation of aerosol particles of a sample flow, preferably the device as described above, is provided. The method comprises i) providing a chamber defining a longitudinal direction and comprising at least one sample inlet for receiving a sample flow comprising aerosol particles and at least one sample outlet for expelling the sample flow from the chamber, ii) providing a vapor source being configured to generate a supersaturation of vapor from a vaporizing fluid in the chamber, whereby aerosol particles are activatable to form cloud condensation nuclei and, from the cloud condensation nuclei, droplets are generatable, and iii) providing a detection device configured to detect aerosol particles and droplets being expelled through the sample outlet. The vapor source comprises at least a first wall element and a second wall element being arranged opposite to one another with respect to a vertical direction of the chamber running perpendicularly to the longitudinal direction of the chamber. The first wall element and the second wall element in each case comprise a cavity. The cavity of the first wall element and the cavity of the second wall element are in each case configured to receive a temperature regulating fluid for regulating a temperature of the first wall element and a temperature of the second wall element, respectively, whereby a temperature gradient between the first wall element and the second wall element and the supersaturation of the vaporizing fluid in the chamber is generatable to activate the aerosol particles.

Any statements made herein regarding the device as such preferably likewise apply to the method of manufacturing the device and vice versa.

The first and second wall elements are preferably printed such as 3D printed. For instance, metal containing plates such as aluminium alloy plates could be provided by 3D printing an aluminium alloy such as AlSi10Mg. However, it is likewise conceivable that the first and second wall elements are provided by Direct Metal Laser Sintering (DMLS), Electron Beam Melting (EBM), Selective Laser Melting (SLM), Binder Jetting, casting, injection moulding, or laser metal deposition, etc. That is, the first and second wall elements preferably have the shape of plates.

The cavities in the wall elements are preferably printed as well, e.g. the metal printer could print the walls of the cavities thus producing a cavity. As this is preferably done by melting a metal, it is possible to build thin walls with cavities which is hard to achieve by machining. Other components of the device are preferably manufactured using at least one of these methods as well. For instance, the spacer element could be printed such as 3D printed, for instance by 3D printing at least one thermoplastic polymer. The through-opening of the spacer element can be generated by cutting the spacer element after it has been printed.

In another aspect, an arrangement 100 for detecting a cloud condensation nuclei activation of aerosol particles of a sample flow is provided. The arrangement comprises at least one device as described above, and a sample supplying device and/or a drying device and/or a particle sizer and/or a temperature regulating fluid supplying device and/or a particle/aerosol counter and/or a sheath fluid supplying device being in communication with the device and/or with one another.

Any statements made herein regarding the device as such, and its method of manufacturing preferably likewise apply to the arrangement comprising the device and vice versa.

In another aspect, a method of detecting a cloud condensation nuclei activation of aerosol particles of a sample flow using the device as described above and/or using the arrangement as described above is provided. The method comprising the steps of i) injecting a sample flow comprising aerosol particles through the sample inlet into the chamber, ii) supplying a vaporizing fluid towards an interior of the chamber, preferably to the fluid distribution element of the first wall element and the fluid distribution element of the second wall element, iii) supplying a temperature regulating fluid into the cavity of the first wall element and of the second wall element such, that a temperature gradient between the first wall element and the second wall element is generated, whereby the supersaturation of the vaporizing fluid in the chamber is generated, and whereby at least some of the aerosol particles are activated and become cloud condensation nuclei that grow into droplets, and iv) detecting the droplets and/or aerosol particles being expelled through the sample outlet with the detection device.

Any statements made herein regarding the device as such, its method of manufacturing, and the arrangement preferably likewise apply to the method of detecting a cloud condensation nuclei activation of aerosol particles using such a device or arrangement and vice versa.

As already mentioned earlier, it is preferred to additionally detect the unactivated aerosol particles (smaller droplets (e.g. > 0.3 um)) with the detection device, and wherein a number of droplets is associated with a number of the activated aerosol particles (larger droplets (e.g. > 1 um)). Determining the activated fraction requires the number of activated and unactivated aerosol particles, which in turn depends on the total number (count) of aerosols entering the chamber. This total count can be obtained using a particle/aerosol counter as mentioned earlier, for instance a so-called Condensation Particle Counter (CPC). As such, the number of activated particles can be measured by the detection device, while the particle/aerosol counter preferably provides the total aerosol count.

A temperature of the first wall element is preferably higher than a temperature of the second wall element. Additionally or alternatively, a linear temperature gradient between the first wall element and the second wall element is preferably generated with respect to the vertical direction of the chamber. Additionally or alternatively, the temperature regulating fluid preferably comprises or consists of at least one of ethanol, propylene glycol, ethylene glycol, glycerin, water with silicone oil, mineral oil, perfluorinated compounds such as Fluorinert (3M), or perfluorocyclohexane. Additionally or alternatively, the sample flow preferably comprises or consists of an aerosolized solution, preferably an ambient aerosol. That is, it is preferred that the first wall element and the second wall element are maintained at different temperatures. In particular, the temperature of the first wall element is preferably higher than the temperature of the second wall element such that a temperature gradient is established between the first and second wall element when seen along the vertical direction of the chamber. The first and second wall element can be maintained at various temperatures. For instance, the first wall element can be operated at temperatures up to 40°C or less, for instance at 20° or 10°. The second wall element is preferably maintained at a lower temperature, preferably at a slightly lower temperature, e.g. at 38°C when the first wall element is at 40°C. Such a temperature difference is sufficient to induce supersaturation. However, other temperatures and temperature differences are likewise conceivable, such as temperatures of the first and second wall element in the range of 1° to 40°. Preferred temperature regulating fluids are fluids that are safe to be operated in the temperature range of the wall elements, e.g. between 1° to 40°.

The first wall element and/or the second wall element preferably comprises or is in connection with at least one temperature sensor configured to measure a temperature of the first wall element and/or of the second wall element. For instance, each wall element could be equipped with at least one such as two or three temperature sensors, for instance thermocouples, that are inserted into the wall elements such as a center of the wall element beneath the cavity. Other temperature sensos are of course likewise conceivable, such as resistance temperature detectors (RTDs), thermistors, infrared sensors, or thermal cameras.

A sheath fluid flow is preferably injected into the chamber through the sheath inlet. The sheath fluid flow preferably corresponds to a dry sheath fluid flow such as dry nitrogen. The sheath fluid flow is particularly preferably particle-free. Additionally or alternatively, the sample flow is preferably flowing within the sheath fluid flow when seen along the longitudinal direction of the chamber. That is, the sample flow is preferably sandwiched between the sheath fluid flow. In other words, the sheath fluid flow preferably surrounds the sample flow when seen along the longitudinal direction of the chamber and/or when seen along the sheath flowing direction of the sheath fluid flow. Additionally or alternatively, a flow rate of the sheath fluid flow is preferably higher than a flow rate of the sample flow, such as at least ten times higher. Additionally or alternatively, a total flow of the sample flow and the sheath fluid flow is preferably in the laminar regime. Additionally or alternatively, a ratio between the flow rate of the sheath fluid flow and the flow rate of the sample flow is preferably in the range if 8:1 to 20:1. A total flow of the sample flow and the sheath fluid flow within the chamber is preferably in the laminar regime to ensure that the sample flow remains centred between the sheath flow, thus experiencing uniform supersaturation conditions. A total flow rate of the total flow is preferably in the range of 1 LPM to 2.8 LPM. The total flow rate is preferably set based on a desired residence time of the aerosol particles in the chamber. Various temperatures of the sheath fluid flow when entering the chamber are conceivable, such as a temperature of 20 °C.

The fluid distributing elements are preferably wetted with the vaporizing fluid being supplied to the fluid inlet of the first wall element at a flow rate of 10 mL/min and/or using at least one pumping device such as a peristaltic pump. Additionally or alternatively, the vaporizing fluid preferably comprises or consists of water, such as at least one of deionized water, distilled water or ultrapure water. Additionally or alternatively, the device is preferably tilted with a tilting device after the vaporizing fluid has been supplied and before the sample flow is injected. The device preferably is tilted by at least 10° such as 25° about a tilting axis running parallel to the longitudinal direction of the chamber and/or parallel to a transverse direction extending perpendicularly to the vertical direction of the chamber in a non-tilted state of the device. That is, the fluid distribution elements such as the filter paper is preferably wetted with the vaporizing fluid. The vaporizing fluid can be supplied to the fluid inlets of the first and second wall elements for instance using a pumping device such as a peristaltic pump that is operating at a flow rate of 10 ml min⁻¹. Other pumping devices are of course likewise conceivable such as syringe pumps, in particular for precise flow control, or diaphragm pumps preferably with adjustable flow rates. A conceivable amount of vaporizing fluid being supplied to the fluid inlet or, in the event of two or more fluid inlets to each of these inlets, is 20 ml or more, for instance 40 ml or 50 ml. Said amount of vaporizing fluid is preferably supplied before the actual measurement is started, i.e. before the sample flow is injected. The vaporizing fluid preferably comprises or consists of water, preferably deionized water and/or distilled water and/or ultrapure water such as Milli-Q^{®} water.

As mentioned earlier, the second wall element preferably comprises at least one channel configured to collect and/or remove excess vaporizing fluid from the chamber preferably via at least one drainage port. To this end it is preferred that the drainage port is in communication with at least one pumping device that is configured to remove excess vaporizing fluid via the drainage port. Conceivable pumping devices are again a peristaltic pump, a syringe pumps, or a diaphragm pump.

To facilitate a uniform vaporizing fluid distribution across the inner surfaces of the wall elements, the device is preferably tilted by the tilting device, for instance by 25° about a tilting axis running parallel to the longitudinal direction of the chamber and/or parallel to the transverse direction of the chamber, for instance using a linear actuator. This procedure is preferably performed once before initiating a new set of measurements. Before each measurement, it is preferred to perform one or more background measurements, wherein the sample flow is filtered to remove all particles to ensure that a readout of the detection device reads a zero count, or if it reads some low count, then this can be subtracted from a detection signal being detected by the detection device during the experiments with the sample aerosol flow. For instance, a HEPA filter (or activated carbon filters or inline electrostatic filters) can be used to establish background measurement.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows and exploded view of a device for detecting a cloud condensation nuclei activation of aerosol particles according to the invention;
- Fig. 2: shows a schematics of an arrangement for detecting a cloud condensation nuclei activation of aerosol particles of a sample flow comprising the device of figure 1;
- Fig. 3: shows a sectional view of the device of figure 1 in an operational state, where a sample flow and a sheath fluid flow are flowing;
- Fig. 4: shows a sectional view of a temperature regulating fluid supplying device of the device of figure 1;
- Fig. 5: shows a sectional view of the temperature regulating fluid supplying device of figure 4, wherein velocity profiles of a temperature regulating fluid supplied by the temperature regulating fluid supplying device are indicated;
- Fig. 6: shows a partial exploded sectional view of the temperature regulating fluid supplying device and a first wall element of the device of figure 1;
- Fig. 7a: shows a top view on an outer surface of the first wall element of the device of figure 1;
- Fig. 7b: shows a top view on an inner surface of the first wall element of the device of figure 1;
- Fig. 8a: shows a top view of an outer surface of the second wall element of the device of figure 1;
- Fig. 8b: shows a top view on an inner surface of the second wall element of the device of figure 1;
- Fig. 8c: shows a wireframe view of the second wall element of the device of figure 1;
- Fig. 8d: shows a partial side view of the second wall element of the device of figure 1;
- Fig. 8e: shows a sectional view of the second wall element of the device of figure 1;
- Fig. 9a: shows a diagram depicting an example of a supersaturation profile exhibited between the first wall element and the second wall element of the device of figure 1;
- Fig. 9b-9d: show diagrams depicting an activated fraction (AF) plotted as a function of supersaturation (SS, %) for ammonium sulphate aerosol particles with dry diameter of 48.5, 58.3, 97.1 nm and 191.4 nm. The critical supersaturation is indicated in the legend for each curve shown and the dotted curve represents a double sigmoid fitted to the measurements. The different panels show SS scans performed at different temperatures indicated. Horizontal error bars represent the estimated uncertainties in SS, derived from a combination of temperature measurements and aerosol layer thickness.

### DESCRIPTION OF PREFERRED EMBODIMENTS

As mentioned initially, aerosol particles play a critical role as cloud condensation nuclei (CCN) in the atmosphere. The capacity of aerosol particles to activate into cloud droplets is measured experimentally using CCN counters (CCNC). Recent findings suggest that the co-condensation effect of semi-volatiles can enhance aerosol particle growth and cloud droplet activation. Conventional CCNCs, such as the streamwise CCNC, heat particles as they transit the CCNC column and may inadvertently not capture the co-condensation effect leading to an underestimate in CCN concentrations. Heating also causes (semi) volatile organic compounds, initially present in the particle phase of mixed atmospheric aerosol particles, to partition into the gas phase, potentially leading to discrepancies in CCN measurements. Additionally, streamwise and other conventional CCNCs struggle to achieve supersaturations below 0.13%, limiting their applicability for studying hydrophilic particles like (NH₄)₂SO₄ larger than 111 nm. To address these limitations, we developed a device 1, herein sometimes called Horizontal Cloud Condensation Nuclei Counter (HCCNC), that can generate a supersaturation even at temperatures below 4°C and supersaturations levels below 0.05%.

In the following, aspects of the device 1 for detecting a cloud condensation nuclei activation of aerosol particles of a sample flow according to the invention are illustrated with reference to the figures, which shall demonstrate its performance, showing accurate performance by generating SS at low temperatures and generating low levels of SS which the widely used commercially available Droplet Measurement Technologies Inc.(DMT) CCNC cannot achieve.

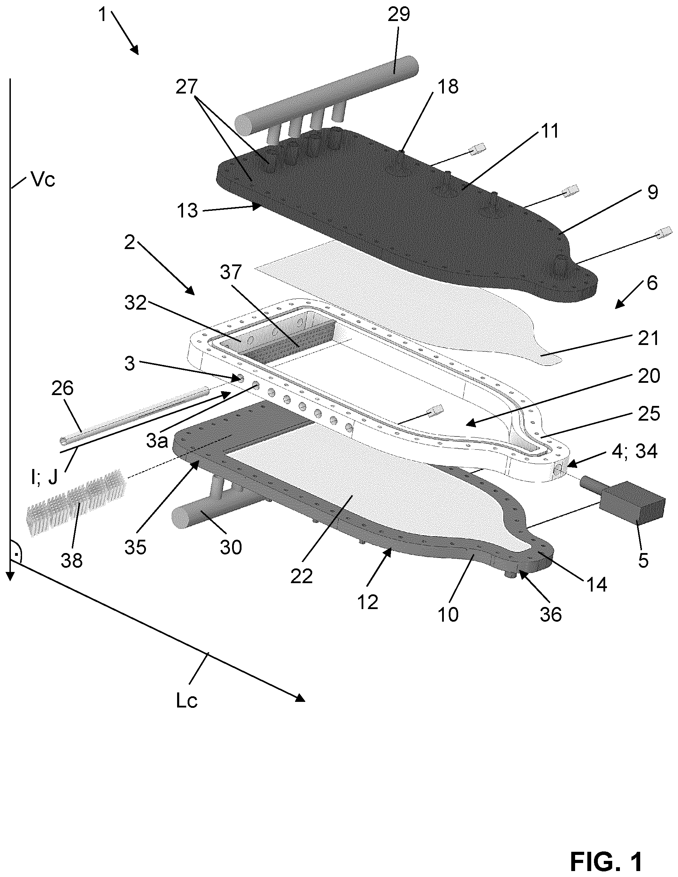

As follows from figure 1, the device 1 comprises a chamber 2 defining a longitudinal direction Lc. The chamber 2 comprises at least one sample inlet 3 for receiving a sample flow 7 comprising aerosol particles and a sample outlet 4 for expelling the sample flow from the chamber 2. The sample inlet 3 is arranged and/or configured to supply the sample flow 7 along an inlet direction I, running perpendicularly to the longitudinal direction Lc of the chamber 2 as well as perpendicularly to a vertical direction Vc of the chamber 2 running perpendicularly to the longitudinal direction Lc of the chamber 2. In the depicted example, a plurality of sample inlets 3, 3a, ... are provided at a distance from one another such that the sample flow 7 is injectable into the chamber 2 at different locations with respect to the longitudinal direction Lc of the chamber 2. The device 1 furthermore comprises an injector device 26 that is partially arrangeable in one of the sample inlets 3 and that is configured to inject the sample flow 7 along an injection direction J.

The chamber 2 furthermore comprises at least one sheath inlet 32 for receiving at least one sheath fluid flow 33 and at least one sheath outlet 34 for expelling the sheath fluid flow 33 from the chamber 2. The sheath inlet 32 and the sheath outlet 34 are arranged such that the sheath fluid flow 33 is flowable within the chamber 2 along a sheath flowing direction Ds being parallel to the longitudinal direction Lc of the chamber 2. The sheath inlet 32 is arranged in a proximal end region 35 of the chamber 2 and the sheath outlet 34 is arranged in a distal end region 36 of the chamber 2. In the present example, the sample outlet 4 is providing the sheath outlet 34, i.e. the sample outlet 4 and the sheath outlet 34 are provided by the same opening of the chamber. That is, the sample outlet 4 is provided in the distal end region 36 of the chamber 2. As furthermore follows from figure 1, a shape of the distal end region 36 of the chamber 2 is configured to focus the sample flow 7 being expelled from the sample outlet 4 towards the detection device 5.

The chamber 2 furthermore comprises a mesh element 37 through which the sheath fluid flow 33 is flowable after being received in the chamber 2 through the sheath inlet 32. The mesh element 37 is configured to control and/or direct a sheath flowing direction Ds of the sheath fluid flow 33. The device 1 furthermore comprises a heat sink element 38 being configured to dissipate heat from the sheath fluid flow 33, wherein the sheath inlet 32 is configured such that the sheath fluid flow 33 is directed to the heat sink element 38.

The device 1 furthermore comprises a vapor source 6 being configured to generate a supersaturation of vapor from a vaporizing fluid 8 in the chamber, whereby aerosol particles are activatable to become cloud condensation nuclei and, from the cloud condensation nuclei, droplets are generatable. To this end a detection device 5 configured to detect aerosol particles and droplets being expelled through the sample outlet 4 is provided. The vapor source 6 comprises a first wall element 9 and a second wall element 10 being arranged opposite to one another with respect to the vertical direction Vc of the chamber 2. The first wall element 9 and the second wall element 10 in each case comprise a cavity 15; 16, wherein the cavity 15 of the first wall element 9 and the cavity 16 of the second wall element 10 are in each case configured to receive a temperature regulating fluid 17 for regulating a temperature of the first wall element 9 and a temperature of the second wall element 10, respectively, whereby a temperature gradient between the first wall element 9 and the second wall element 10 and the supersaturation of the vaporizing fluid in the chamber 2 is generatable to activate the aerosol particles. The first wall element 9 and the second wall element 10 in each case comprises an outer surface 11; 12, an opposed inner surface 13; 14, wherein the inner surface 13 of the first wall element 9 and the inner surface 14 of the second wall element 10 face one another. The cavity 15; 16 is formed between the outer surface 11; 12 and the inner surface 13; 14 of the respective wall elements.

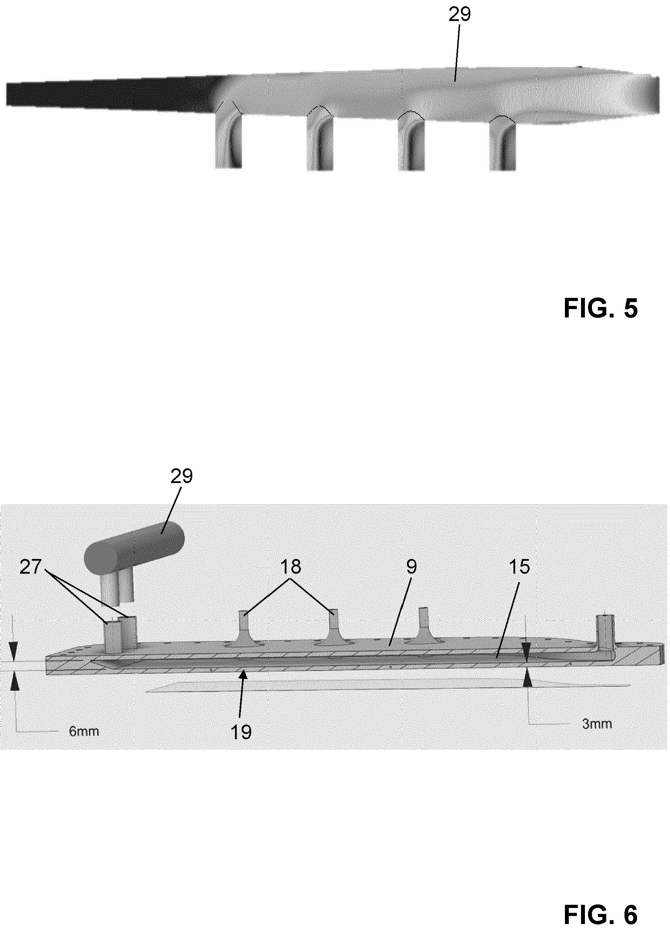

As follows from figures 1, 6 and 7a, the first wall element 9 comprises fluid inlets 18 for receiving the vaporizing fluid 8 and a fluid outlet 19 for supplying the vaporizing fluid 8 towards an interior of the chamber 20. The fluid inlets 18 of the first wall element are provided on the outer surface 11 of the first wall element 9 and the fluid outlet 19 of the first wall element is provided on the inner surface 13 of the first wall element 9. The fluid inlets 18 of the first wall element 9 are in fluid communication with the fluid outlet 19 of the first wall element 9 via channels extending through the first wall element.

The inner surface of the first wall element and the inner surface of the second wall element 10 comprise in each case a fluid distributing element 21; 22. The fluid distributing elements 21; 22 are configured to distribute the vaporizing fluid 8 along the inner surface 13; 14 of the first wall element 9 and of the second wall element 10, respectively. In the depicted example, the fluid distributing elements 21; 22 are filter papers that are in direct contact with the inner surfaces 13; 14 and that are configured to wet the inner surfaces 13; 14 of the first wall element 9 and of the second wall element 10, respectively.

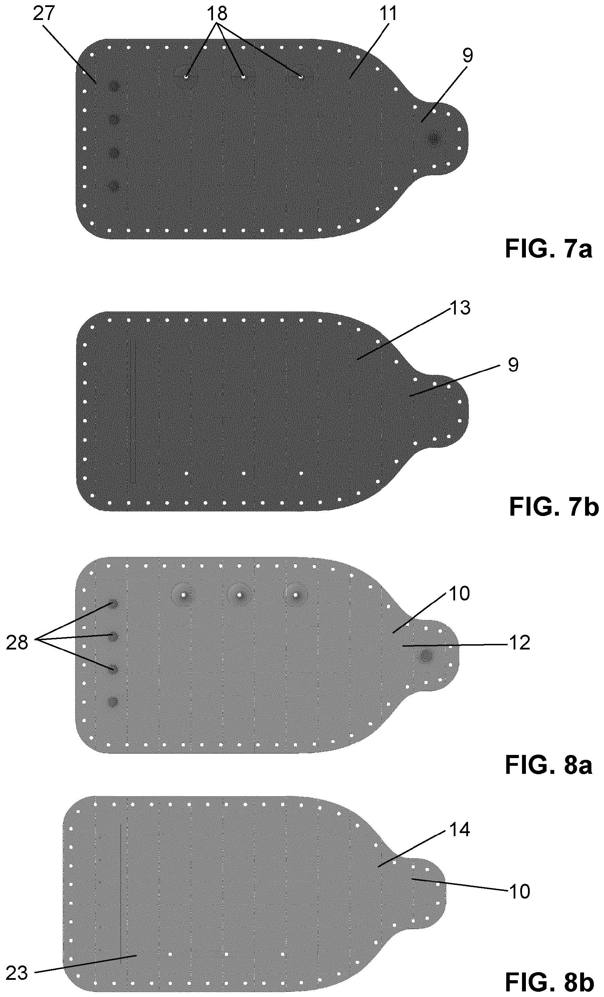

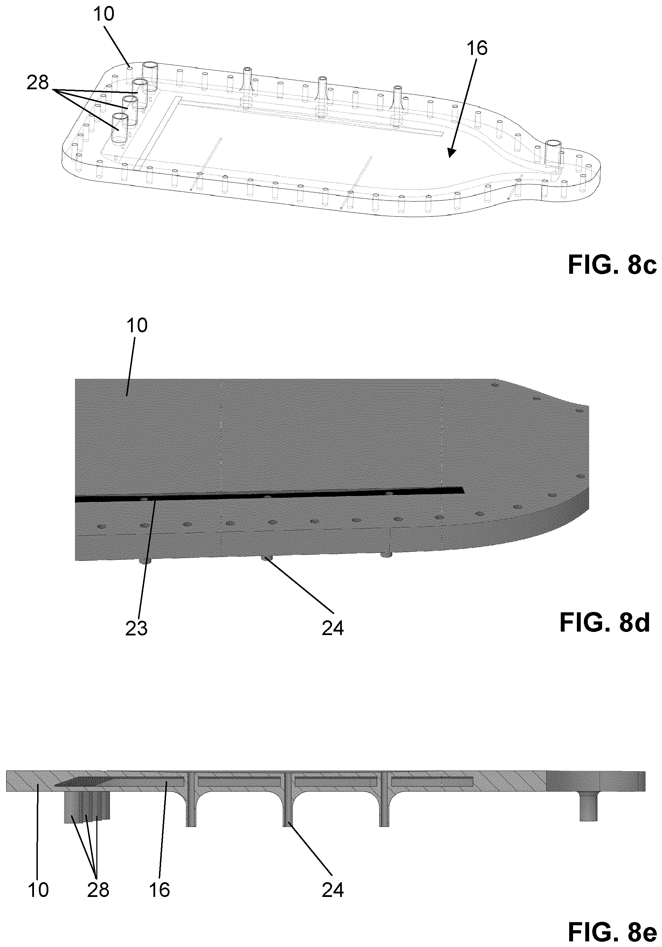

The second wall element 10 comprises a channel 23 configured to collect and remove excess vaporizing fluid 8 from the chamber 2 via at least one drainage port 24, see figures 1 and 8b to 8e. The channel 23 is provided on the inner surface 14 of the second wall element 10 and the drainage port 24 is provided on the outer surface of the second wall element 10.

The first wall element 9 and the second wall element 10 are integral parts of the chamber 2 and partially delimit the chamber 2. In the depicted example, the device further comprises a spacer element 25 being arranged between the first wall element 9 and the second wall element 10 with respect to the vertical direction Vc of the chamber 2. The spacer element 25 is an integral part of the chamber 2 and partially delimits the chamber 2 as well. Moreover, the spacer element 25 thermally insulates the first wall element 9 and the second wall element 10 from one another and, in the depicted example, comprises the sample inlets 3 and the sample outlet 4.

As follows from figures 1, and 4 to 8e, the first wall element 9 and the second wall element 10 in each case comprise fluid ports 27; 28 being in fluid connection with the cavity 15; 16 and being configured to supply the temperature regulating fluid 17 into the cavity 15; 16 of the first wall element 9 and of the second wall element 10, respectively. The device furthermore comprises fluid distribution elements 29; 30 being configured to distribute the temperature regulating fluid 17 into the cavity 15; 16 of the first wall element 9 and of the second wall element 10, respectively. Here, the fluid distribution elements 29; 30 are in each case a manifold being configured to distribute the temperature regulating fluid 17 among the several fluid ports 27:28 of the first wall element 9 and of the second wall element 10.

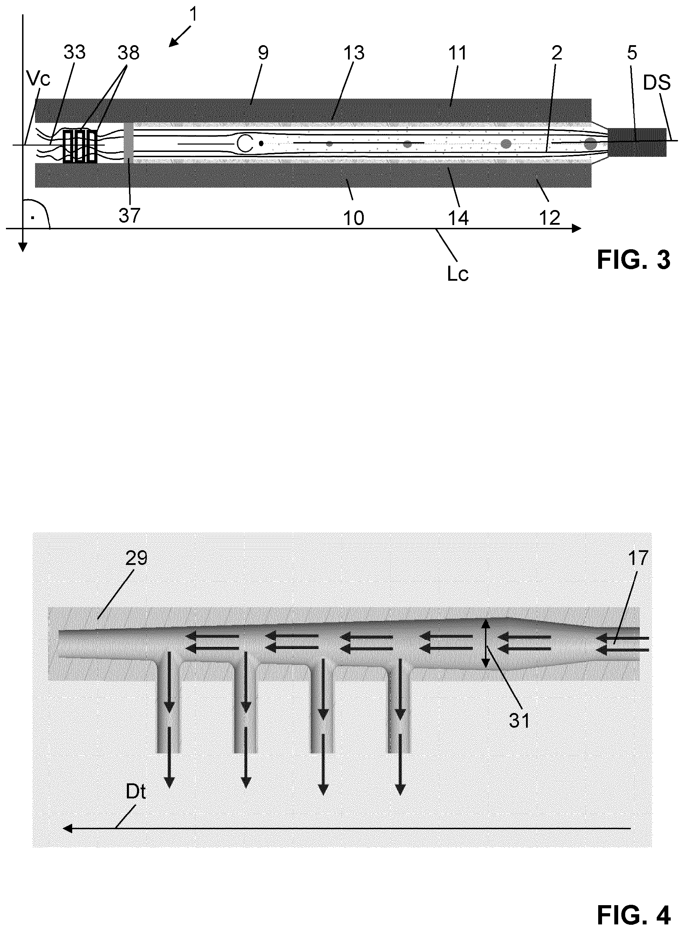

As follows from figure 4, an internal diameter 31 of the fluid distribution elements 29; 30 decreases along a direction Dt along which the temperature regulating fluid 17 is flowable when being distributed into the cavity 15, 16 of the first wall element 9 and of the second wall element 10, respectively.

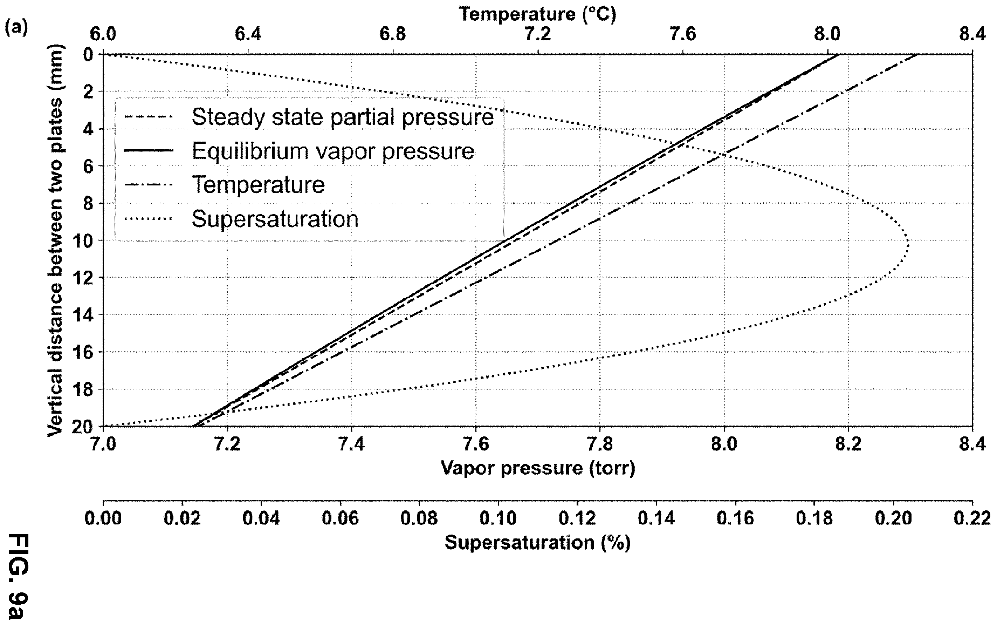

That is, key components of the HCCNC are two temperature controlled parallel wall elements 9; 10, that have here the shape of plates separated by a polymer spacer element 25. The inner surfaces 13; 14 of the plates are lined with wetted filter paper and sandwich a polymer spacer element (see Fig. 1). Maintaining the top and bottom plates at slightly different temperatures ( bottom plate maintained at a slightly lower temperature than the top plate) establishes a linear temperature gradient in the spacer region between the plates. Since the inner surfaces 13; 14 of both plates 9; 10 are wetted, a steady-state linear partial pressure of water develops between the cold and warm plates. As the equilibrium vapor pressure of water as a function of temperature is nonlinear, this results in a supersaturated environment with respect to water in the spacer cavity, with maximum supersaturation (SSmax) occurring near the center of the spacer element cavity, see Fig. 9a. That is, figure 9a depicts the supersaturation (SS) profile between the two parallel wall elements or plates 9; 10 in the HCCNC, wherein second wall element is cold at 6.3 °C (average of TC2 = 6.07 and TC3 = 7.41 °C) and the first wall element is warm at 8.2 °C (average of TW2 = 8.11 and TW3 = 8.38 °C), shown by the dash-dotted line. The solid line represents equilibrium water vapor pressure, while the dashed line shows the steady-state partial pressure across the chamber 2. The dotted curve indicates the water SS profile.

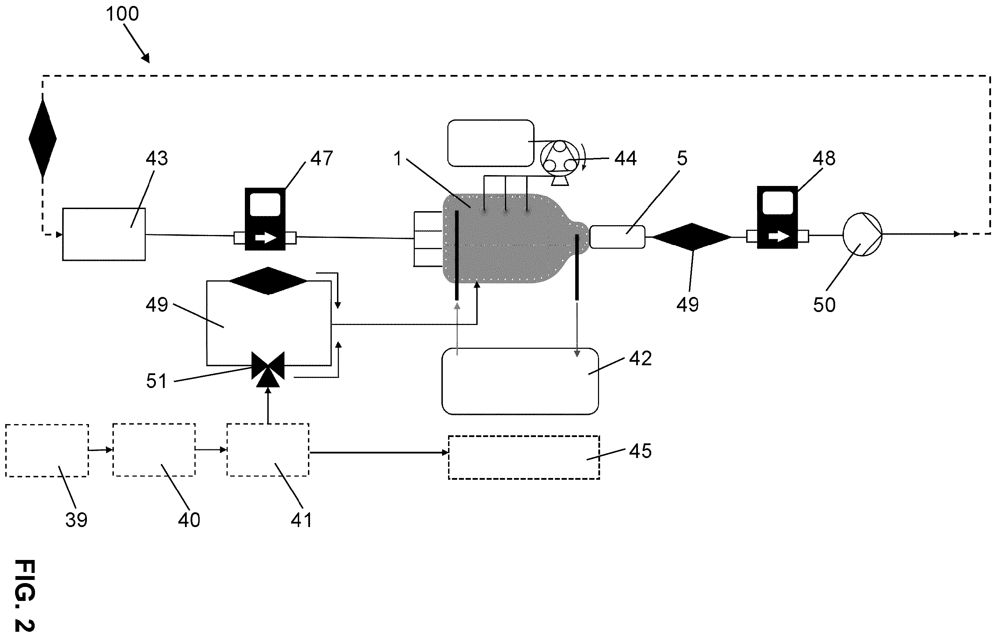

As a horizontally oriented CCNC, the temperature at the centerline is constant unlike the streamwise CCNC, where the lower section of the column has higher temperatures, which can drive buoyancy-induced air movement that opposes the intended downward flow and may create turbulence. This turbulence not only disrupts the laminar flow but also displaces particles from the centerline and may equalize the temperature and water vapor profiles, potentially altering the set SS conditions (Rogers, 1988; Stetzer et al., 2008; Brunner and Kanji, 2021). In the HCCNC, the aerosol sample flow 7 is sandwiched between a particle-free sheath flow 33, which is typically set to at least ten times that of the sample flow 7. The total flow within the interior 20 of the chamber 2 is maintained in the laminar regime to ensure that the aerosol sample remains centred between the particle-free sheath flows, thus experiencing uniform SS conditions. Since SS cannot be measured directly, the SS experienced by particles is inferred from temperature measurements and flow rates. Precise temperature control is a critical aspect of the functionality of CCNCs, particularly of the HCCNC as it directly influences the SS. The temperature modulation is facilitated by the top as first wall element or plate 9 and the bottom second wall element or plate 10 (Fig. 1). The second wall element or bottom plate 10 differs slightly from the first wall element or top plate 9 in terms of design. As mentioned earlier, the first wall element or top plate 9 features fluid ports 18;19 for receiving the vaporizing fluid 8 (e.g. Water), while the second wall element or bottom plate 10 includes a small drainage channel 23 designed to collect excess water which can be removed via drainage ports 24 (see also next section). The design of cavity/interior 15;16 of first wall element 9 and the second wall element 10 posed notable challenges for conventional manufacturing methods, therefore 3D printing was utilized for fabrication. The wall elements or plates 9; 10 in the depicted example were 3D printed from an aluminum alloy AlSi10Mg, selected for its compatibility with available 3D printing processes, as pure aluminum or other 3D metal printing options were not accessible during fabrication. AlSi10Mg possess a low density of 2.67 g/cm³, good mechanical, thermal conductivity of 130-150 Wm-1 K-1, and chemical compatibility with coolants such as ethanol. The wall elements or plates 9; 10 have the dimensions of 410 mm (L) x 210 mm (W) x 13 mm (H). Compared to other parallel plate CCN and INP counters reported in the literature, the HCCNC plates are notably more compact, resulting in a reduced total heat capacity. This allows the usage of less expensive chillers as temperature regulating fluid supplying devices 42 with low heat load capacities while the temperature of the plates can still be increased or decreased rapidly which facilitates efficient changes in SS cycles, see figure 2. The wall element or plate temperatures are regulated using two external recirculating chillers (e.g. Lauda Proline RP855 and Lauda Eco RE620). Each wall element or plate 9; 10 is equipped with three thermocouples (Transmetra, TEMI313-K05-200-MS), inserted into the center of the wall element or plate 9; 10 beneath the cavity/ interior 15;16 of the first and second wall element 9;10 which provides temperature readings at one-second intervals. As mentioned earlier, the temperature regulating fluid 17 in the form of a cooling fluid is distributed to the wall elements or plates 9; 10 through a fluid distribution element 29; 30 in the form of a chiller manifold (see Fig. 1). As shown in Fig. 4, the internal diameter of the manifold gradually decreases along the streamwise direction, ensuring even distribution of the cooling fluid across all four inlets of the plates. This design compensates for pressure losses caused by friction over the length of the manifold. By reducing the diameter, the cross-sectional area decreases, causing the flow velocity to increase as per the continuity equation (Fox & McDonald, 2004) which helps maintain sufficient pressure to effectively transport the cooling fluid. This ensures an even distribution of cooling fluid across all four inlets of the plates.

The inner surfaces of both wall elements 9; 10 are lined with fluid distributing elements 21; 22 in the form of a single layer of self-adhering borosilicate glass microfibre filter paper (PALL 66217, 1 µm, 8×1") (Fig. 1). The filter paper 21; 22 is wetted using a peristaltic pump 44 operating at a flow rate of 10 ml min-1, delivering 40 ml of Milli-Q water from a reservoir to each of the three fluid inlets or wetting ports 18 located on the first wall element or top plate 9 before the experiment. Two of the three fluid inlets 18, supply water to the filter paper 21 on the first wall element or top plate 9, while the third supplies the second wall element or the bottom plate 10. To ensure complete wetting of the filter paper 21; 22 on both wall elements or plates 9; 10, approximately 150ml of Milli-Q water is pumped into the chamber and the excess (~100 ml) is drained through a peristaltic pump via the drainage port 24 in the second wall element or bottom plate 10. To facilitate uniform water distribution across the width of the wall elements or plates 9; 10, the device 1 is tilted by 25° parallel to the length axis of the HCCNC using a tilting device comprising a tilting frame and a linear actuator (not depicted). This procedure is performed once before initiating a new set of experiments. It has been observed that the wetted filter paper 21; 22 can consistently act as a water vapor source for up to 12-15 experiments consisting of a SS ramp from 0 to 0.8%, each consisting of 30-minute SS scan cycles with average ammonium sulphate aerosol concentrations from 300 - 900 cm-3.

The spacer element 25 made of polyvinylidene fluoride (PVDF) serves as a physical and thermal barrier between the two wall elements or plates 9; 10. The interior 20 of the chamber 2 is created by a cut-out within the spacer element 25. The ogive shape of the spacer element 25 was chosen after evaluating multiple design options through simulations conducted under laboratory boundary conditions in ANSYS software. The sample particles are introduced into the chamber 2 through an injector device 26 via a slit measuring 75 x 0.40 mm. The injector device is made of stainless steel, with an internal diameter of 4.57 mm and a length of 250 mm. The injector device can be mounted in any of the eight available sample inlet ports 3, 3a, ... of the spacer element 25 (see Fig. 1), enabling precise control over particle residence time within the chamber 2 and mitigating sedimentation issues that would arise from the horizontal orientation of the CCNC.

The total flow rate of 1.5 L min-1 through the HCCNC is apportioned into a sheath-to-sample flow ratio of 10:1. This ratio is maintained to avoid wall losses and to confine the sample flow 7 to a thin layer minimizing the variation in SS and temperature that the aerosol is exposed to in the center of the chamber 2. The sheath flow 33 is controlled using a mass flow controller (MFC, ALICAT, MC-20SLPM) and is introduced through four sheath inlets 32 or ports directed onto aluminum heat sink elements 38 on the bottom or second wall element 10 (see Fig. 1), allowing rapid cooling of the flow to equilibrate with the chamber temperature. The sheath flow 33 then passes through a mesh element 37 that stabilizes the flow and minimizes turbulence, as described by Brunner & Kanji (2021). The plain-weave type-304 stainless steel wire mesh element, with a mesh size of 250 mesh per inch and a wire diameter of 0.04 mm, spans the full width and height of the spacer cavity. After the mesh element 37, the combined stream of sheath and aerosol, flows horizontally in a laminar fashion through the chamber 2, where the SS and temperature profile forms according to Fig 9a. Particles with a SScrit lower than the SScentreline activate and grow into droplets. A cone shaped exit of the chamber 2 focuses the sample and sheath flows, directing the airstream into a detection device 5. The cone is angled to ensure that the total flow merges smoothly, avoiding turbulence. A pumping device (KNF, N8134ANE) 50 downstream of the OPC maintains the total flow of the device 1 which is also controlled by a mass flow controller 48 (ALICAT, MC-20S L min-1).

The detection device 5 (e.g. Optical Particle Counter, OPC) used to detect droplets at the sample outlet 4 of the HCCNC is equipped with a 780 nm, 35 mW photodiode laser. The onboard electronics processor from MetOne categorizes and sizes detected particles into four selectable size bins (from >0.3 to >10 µm). Although the detection device 5 is calibrated for a flow rate of 2.83 L min-1 as specified by the manufacturer, we operated it at a reduced flow rate of 1.5 L min-1. This adjustment was made to ensure adequate residence time for particles within the HCCNC, as higher flow rates reduce the time particles remain under SS conditions, impacting their growth. To minimize the exposure of activated droplets to external environmental conditions and to ensure their rapid entry into the scattering volume, the distance between the HCCNC outlet and detection device 5 inlet is minimized (17mm). The residence time in this section is also reduced due to an increase in local flow velocity due to the cone shaped exit.

The device 1 furthermore comprises an electronic interface for operation of the HCCNC, designed to control its various features and processes. The primary components of this interface include National Instruments (NI) modules, microcontrollers (Arduino), MFCs, actuators, and relays. These components are housed within a waterproof plastic enclosure for protection. Temperature measurements are collected through three analog-to-digital (A/D) input channels of the NI-9213 module, which offers a 24-bit resolution. The Arduino microcontroller manages the operation of water pumps and actuators facilitating the tilting mechanism of the HCCNC during the wetting process. The chillers and SS cycles are controlled through a self-programmed interface in Python 3.12. In contrast, OPC data is collected using COMET software provided by the manufacturer.

Figure 2 schematically illustrates a representative arrangement 100 for detecting a cloud condensation nuclei activation of aerosol particles , which serves as a typical, but not necessarily exact, configuration. A sample flow comprising a device 1 as just described and a sample supplying device 39, a drying device 40, a particle sizer 41, a temperature regulating fluid supplying device 42 a particle/aerosol counter 45 and a sheath fluid supplying device 43 being in communication with the device 1 and with one another. In particular, figure 2 shows the external components of the HCCNC and the flow setup used for the validation experiments. In the current configuration, the temperature of the first wall element or top plate 9 is regulated by a temperature regulating fluid supplying device 42 in the form of a Lauda Proline RP855 chiller, while the second wall element or bottom plate 10 temperature is controlled by a temperature regulating fluid supplying device 42 in the form of a Lauda Eco RE620 chiller. Ethanol is used as the temperature regulating fluid 17 or coolant fluid in both chillers. The flow of the chilled fluid 17 into the wall elements or plates 9; 10 and the subsequent outflow of the warmed fluid are indicated by arrows in Figure 2. Three pumping devices 44 in the form of peristaltic pumps (only one shown for clarity in Fig. 2) wet the filter paper 21; 22 before the start of an experiment. Dry, particle-free nitrogen serves as sheath flow 33 for the HCCNC, controlled by a mass flow controller 47. An ammonium sulphate solution (0.1 g L-1) is aerosolized using a constant output atomizer ( TSI model 3076). The wet aerosol then passes through a diffusion dryer (filled with a 4 Å molecular sieve) followed by a differential mobility analyzer (DMA, Model 3082, TSI Inc.) for size selection. The aerosol flow is split by a Y-connector to a condensation particle counter (CPC, Model 3072, TSI Inc.) 45 and the HCCNC 1. The detection device (OPC) 5 was configured in this experiment to measure particles concentrations in the >0.5, >0.7, >1.0, and >2.5 µm size bins. Initially, the sample flow to the HCCNC 1 is directed through a high-efficiency particulate air (HEPA, Model 12144, Pall Inc.) filter device 49 for background measurements. Once a low background was confirmed, the valve 51 was switched to sample the aerosol particles. The injector device 26 was placed at position 8 relative to the detection device (OPC) 5 to ensure the maximum residence time of the particles within the chamber 2 (21 seconds). All unused positions were securely closed with plugs to seal the chamber 2. A mass flow controller 48 downstream of the detection device (OPC) 5 is set to 1.5 Std L min-1 and the sample air flow rate of 0.257 Std L min-1 is determined by the difference between the flow exiting the spacer element 25 through the detection device (OPC) 5 and the sheath air entering the spacer element 25 (~10:1 ratio).

Ammonium sulphate was used as the test species for evaluating the performance of the HCCNC 1 due to its well-characterized hygroscopicity and its extensively studied CCN activation properties (Brechtel and Kreidenweis, 2000). Aqueous ammonium sulphate solutions were atomized, dried, and size-selected using a differential mobility analyzer (DMA) 41 with a sheath flow rate of 12.5 L min-1, while the HCCNC aerosol stream flow was maintained at 0.12 L min-1 for the validation experiments.

Validation experiments were conducted using mobility diameters of 50, 60, 100, and 200 nm. As the DMA classifies charged particles based on their electrical mobility (Knutson and Whitby, 1975; TSI, Model 3082), the mobility diameter for spherical particles is well-defined and corresponds to the particle's volume-equivalent diameter. However, since the mobility diameter is a measure of particle behavior rather than an intrinsic property, the relationship between particle shape and the electric field in the DMA must be considered for aspherical particles. ammonium sulphate particles exhibit asphericity (Zelenyuk and Imre, 2007), thus necessitating the conversion of mobility diameter to volume-equivalent diameter (Zelenyuk et al., 2006). To calculate the volume-equivalent diameter, the shape factors from Kaaden et al., (2009) were used. The conversion, described by Equation (1), neglects the Cunningham correction, as its influence becomes significant only at the third decimal place. ${d}_{ve} = \frac{{d}_{m}}{χ}$ 1

In this equation, *dᵥₑ* is the volume-equivalent diameter, *dₘ* is the mobility diameter, and *χ* represents the shape factor. A shape factor of 1.03 was applied for mobility diameters of 50, 60, and 100 nm, while a factor of 1.045 was used for 200 nm (Zelenyuk et al., 2006). After conversion, the mobility diameters of 50, 60, 100, and 200 nm corresponded to volume-equivalent diameters of 48.5, 58.3, 97.1, and 191.4 nm, respectively. All results presented in this study are based on volume-equivalent diameters. In this study, we refer to dry particle sizes < 100 nm as small particles, and those > 100 nm as larger particles.

Once particles experience SS exceeding the critical Supersaturation (SScrit), they activate and grow. Particles must grow to a size > 1 µm to be classified as activated droplets, as hygroscopic growth alone cannot achieve such sizes for our selected dry particle sizes. This growth can be modelled using diffusional growth calculations, as described by Rogers (1988). During the validation experiments, droplets > 1 µm were classified as cloud droplets for dry particles up to 100 nm in diameter, while droplets exceeding 2.5 µm were classified as cloud droplets for dry particles of 191.4 nm in diameter (see section 3.1.2). This approach was adopted for two primary reasons: first, activation was not clearly detectable in the 1 µm detection device (OPC) 5 channel as the droplets already appear to have grown to 1 µm prior to their activation. This observation is consistent with predictions from Köhler theory and results from the E-AIM (IV) model, which suggest that an ammonium sulfate particle with a dry diameter of 191.4 nm grows to approximately 1.4 µm at a relative humidity of 99.9% (saturation ratio, Sw = 0.99) (Wexler and Clegg, 2002; Clegg et al., 2013). Second, the detection device (OPC) 5 used in this study has a 2.5 µm channel as the next available size above 1 µm.

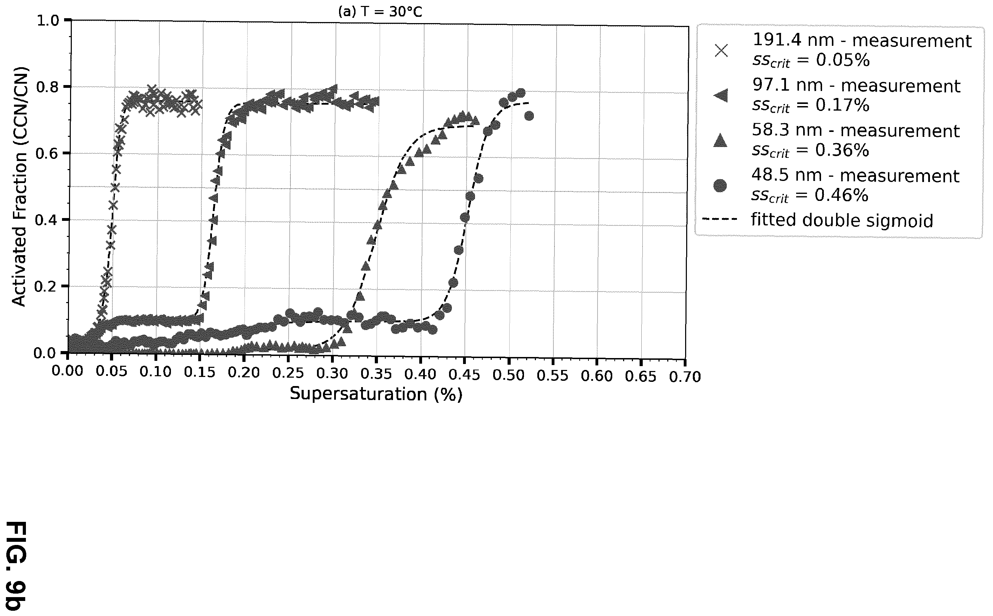

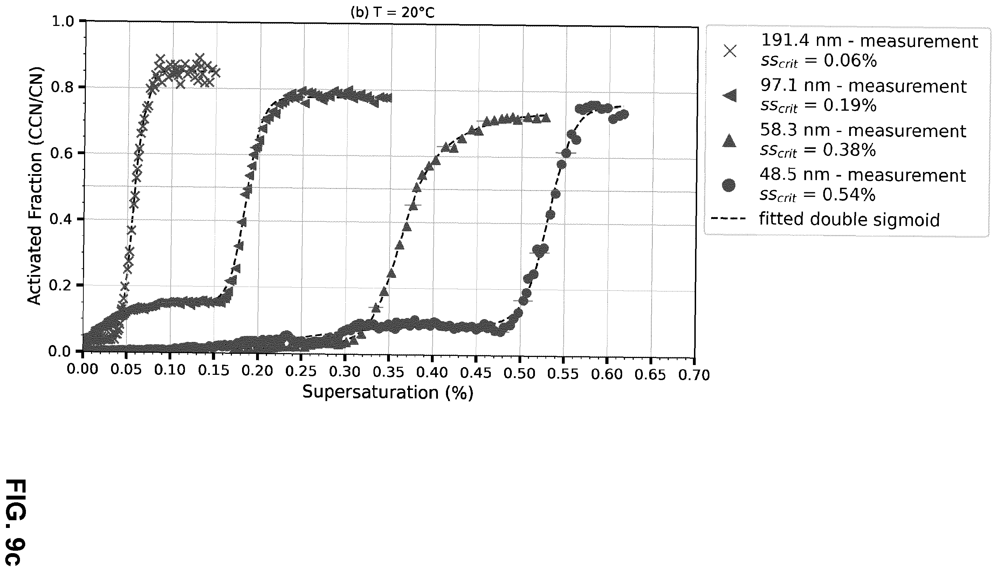

All validation experiments were performed by stepping the SS (also known as S-scans) within the chamber 2. Initially, both wall elements or plates 9; 10 of the HCCNC were held at the same temperature, corresponding to a SSw of 0%. Subsequently, the temperature of the second wall element or bottom plate 10 was lowered at a rate of 0.2 °C min-1, causing a gradual increase in SS within the chamber 2. Although the setup would allow both wall elements or plates' temperatures to be adjusted, controlling the temperature of only the second wall element or bottom plate 10 provided finer control over SS generation (e.g., from 0.05 to 0.1% SS, the rate of change SS was 0.013 ± 0.008 per minute). For the performance evaluation of the HCCNC, S-scans were conducted at nominal temperatures of 30°C, 20°C, and 8°C for each particle diameter (48.5, 58.3, 97.1, and 191.4 nm). A minimum of three experiments were performed for each size and temperature, to ensure the reproducibility of the results. Typical sets of data for the activation of ammonium sulphate particles are shown in Fig. 9b and 9c for particle diameter, 48.5, 58.3, 97.1 and 191.1 nm at 30 and 20°C. A CPC 45 was used in parallel to measure particle concentrations and to determine the activated fraction (AF), defined as the ratio of CCN (droplets measured in the detection device (OPC) 5) to condensation nuclei (CN, dry particle concentration in the particle/aerosol counter (CPC)). The AF values range from 0 (no activation) to 1 (complete activation), with an AF of 0.5 indicating the SScrit for CCN activation. Particle concentrations were maintained between 300-900 cm-3 during the experiments.

For all particle diameters, there is a clear transition from no activation at lower SS to a plateau region indicative of full activation. Although theoretically the AF should reach 100%, in practice it is typically observed between 70% and 90% during our experiments. Discrepancies of this magnitude are common in the literature for TGDCs (Cruz and Pandis, 1997; Corrigan and Novakov, 1999; Kumar et al., 2003). This can arise from various factors, such as the combined ±14% uncertainty from the detection device (OPC) 5 and CPC counting and the variation in SS experienced in the aerosol layer. If the aerosol layer is thicker than calculated, a small fraction of particles will be exposed to lower SS than calculated. The S-shape of the activation curve and the plateau at higher SS exhibit typical CCN activation behavior and illustrate the device's ability to detect and measure droplet activation and growth at low temperatures and supersaturations. A first plateau in the AF indicates the behavior of doubly charged particles (Lance et al., 2006) (Fig. 9b-d). For example, in experiments involving 97.1 nm particles at 20°C, activation is observed beginning with a SS of 0.025%, plateauing at 0.12%. The half-rise (critical supersaturation), of the sigmoidal activation curve was determined to be at 0.07%. This value corresponds to a particle size of 158 nm, which is characteristic of the activation of doubly charged particles. The measured SScrit from the HCCNC for ammonium sulphate particles with dry diameters of 48.5, 58.3, 97.1, and 191.4 nm were 0.48, 0.37, 0.18, and 0.05%, respectively, at 30 °C. These values align well with predictions from Köhler theory (Köhler, 1936), which predicts SSKöhler = 0.47, 0.36, 0.17 and 0.05%, respectively at 30°C. Similarly, at 20 °C, the measured SScrit values of 0.54, 0.41, 0.20, and 0.06% closely match the theoretical SSKöhler values of 0.52, 0.39, 0.18, and 0.06%, respectively. The horizontal error bars in Fig. 9b-d represent the estimated uncertainties in SS, derived from temperature measurements and aerosol layer thickness as detailed in the next section.

The AF is governed by critical parameters such as particle count and the flow ratio between sheath and sample flow since the dilution controls the concentrations of CN in the chamber. Since SS cannot be measured directly, its accuracy within the HCCNC is inferred from temperature measurements, with the temperatures of the first and second wall elements 9; 10 defining the SS field. Temperature readings are obtained from three thermocouples mounted on each HCCNC wall element or plate 9; 10, ensuring precise determination of the temperature gradient across the chamber 2 and, by extension, the SS profile (Fig. 9a). While three thermocouples are installed on each wall element or plate 9; 10, only the two closest to the injector device 26 (TW2/TC2) and the chamber outlet 4 (TW3/TC3) are used to calculate the mean wall element temperature, as particles are exposed to cavity conditions only after the injector element.

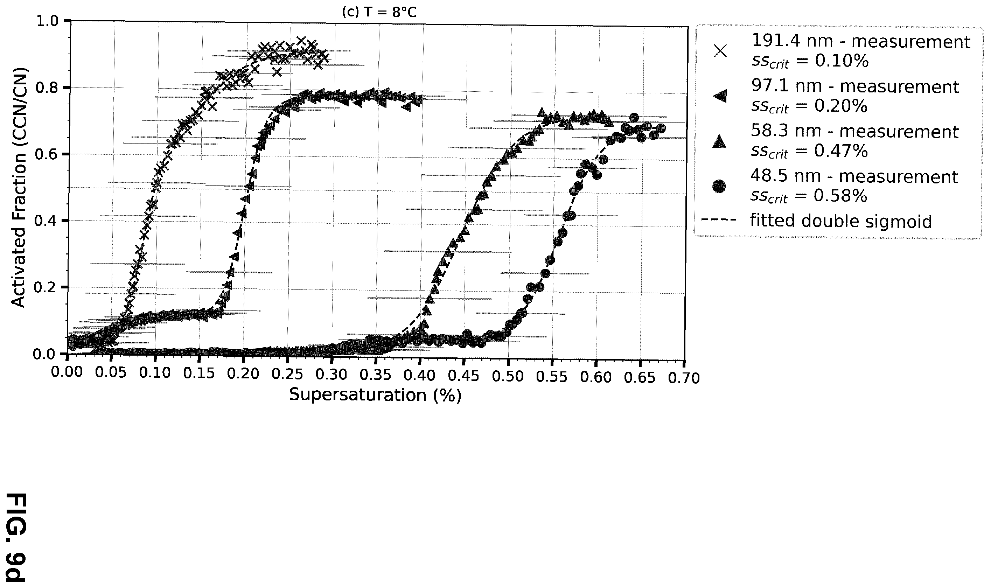

Figure 9(d) presents the activation curves for 97.1 nm and 191.4 nm ammonium sulphate particles at 8 °C. The sharp activation curves validate the ability of the HCCNC to generate a supersaturation at lower temperatures. Most conventional CCNC designs, such as the DMT CCNC and the CCNC from Kumar et al. (2003), employ a humidified sheath flow to maintain a moist filter paper. This approach requires heating the column or plates to avoid fog formation upon aerosol introduction or to prevent condensation within the chamber. The HCCNC addresses these limitations by employing a dry sheath flow, enabling experiments to be conducted at lower temperatures while still avoiding condensation and spurious supersaturation generation when humidified sheath flow enters the chamber 2 at lower temperatures. Furthermore, the peristaltic pump system 44 efficiently wets the filter paper 21; 22 on-demand, eliminating the need for continuous humidification and allowing broader operational temperature ranges. The measured SScrit from the HCCNC for ammonium sulfate particles with dry diameters of 48.5, 58.3, 97.1, and 191.4 nm were 058, 0.46, 0.20, and 0.1%, respectively, at 8 °C. These measurements align well with the predictions from Köhler theory - 0.57, 0.43, 0.17 and 0.07%, respectively, given the experimental uncertainties.

Besides the low temperature operation, another novelty of the HCCNC is its ability to operate at very low supersaturation levels. The DMT CCNC and old CFDC's typically operate above 0.13 and 0.1 % SS respectively (Roberts and Nenes, 2005; Nenes et al., 2001). Figure 9b-d demonstrates the activation curve for 191.4 nm particles, which necessitate very low SS for activation (0.05%). The HCCNC precisely maintains the required temperature gradient to achieve these low SS conditions. For instance, to achieve a SS of 0.05% at warmer temperatures, a temperature difference of just 1.2°C between the two wall elements or plates 9; 10 is required. The HCCNC's ability to operate at lower temperatures and to achieve low SS levels is largely attributed to its cavity-based wall element or plate and spacer design. The metal thickness separating the filter paper 21; 22 from the temperature regulating fluid or cooling fluid 17 is only 3 mm, which ensures precise temperature control and, consequently, accurate regulation of supersaturation. Also, the steep activation observed in the particles indicates that most of the particles were exposed to a consistent supersaturation, suggesting minimal turbulence within the chamber 2. This is supported by the calculated Reynolds number for the HCCNC, derived from turbulent kinetic energy (TKE) values obtained from CFD simulation results. The Reynolds number ranges from 0.009 to 395 in HCCNC, well below the turbulent flow regime threshold of 4000.

To validate the HCCNC, CCN activation experiments were conducted in the temperature range from 30°C - 8 °C to measure the SScrit for size selected ammonium sulphate particles. To verify accuracy, the SScrit measured was compared to the predicted SScrit calculated with standard Köhler theory and data from Davies et al. (2019). The SS values used for comparison (SSKöhler) were calculated using Eq. (2) as discussed in Kumar et al., (2003). ${S}_{C} = {\left(4{A}^{3}/27B\right)}^{1 / 2}$ 2 where *S_{C}* is the critical supersaturation. The values of A and B calculated using Eq. (3) and (4): $A = \left(2{σ}_{sol}{M}_{w}\right) / \left({ρ}_{sol}RT\right)$ 3 and $B = \left(3{vm}_{s}{M}_{w}\right) / \left(4{πρ}_{sol}{M}_{s}\right)$ 4

Where σsol is the surface tension of the solution and it is set to that of water for temperatures of 30 °C, 20 °C, and 8 °C, with values taken from Vargaftik et al., (1983) which are 0.071, 0.073 and 0.075 Nm-1 respectively. Mw is the molecular weight of water (18.02 g mol-1), the density of the solution (water) ρsol is taken as 997 kg m-3 and R is the ideal gas constant. The temperature (T) used is Tactivation (i.e., temperature at which particle activation is observed during experiments) was 29.10, 18.90 and 7.20 °C corresponding to experiments conducted at 30, 20, and 8 °C respectively. The effective van't Hoff factor, v is 2.04 for non-ideal behavior or 3 for complete dissociation, ms is the mass of ammonium sulphate in the dry particle based on its radius, Ms is the molecular weight of ammonium sulphate (132.1 g mol-1).

Hence, unlike conventional CCN instruments, which generate SS at higher temperatures, the HCCNC 1 according to the invention can achieve SS at lower temperatures, which is more representative of atmospheric conditions. This capability enables opportunities to investigate phenomena such as co-condensation of organic vapours that would partition out of the particle phase at higher temperatures or mixed aerosol particles with (semi) volatile organic compounds. Additionally, the HCCNC's ability to operate at very low SS levels enables the analysis of larger particles of any compound (less hygroscopic than ammonium sulphate) than those that can be studied with the DMT CCNC, which is only reliable down to a supersaturation of 0.13%. This feature also facilitates investigations into surface tension reduction of the droplet, where the required critical supersaturation can be exceedingly low. In HCCNC, the largest detection device 5 (OPC) channel utilized for validation experiments to quantify droplets is 2.5 µm.

To estimate the maximum particle concentration at which we can operate before water vapor competition becomes significant for 2.5 µm droplets, we calculate a particle concentration of 7400 cm⁻³, assuming a temperature of 30°C and supersaturation (SS) of 0.2%. The HCCNC is lightweight and compact, indicating its potential suitability for future field campaigns. The sample and sheath flow system in the HCCNC is simpler compared to vertical geometry setups. The wall elements or plates 9; 10 were fabricated using 3D metal printing, a technology that is becoming increasingly widespread and accessible, suggesting that the cost is likely to decrease in the future. Another advantage of the HCCNC is its ability to operate with dry sheath flow, eliminating the need for nafion humidifiers and allowing operation at cooler temperatures. The wetting of the filter paper 21; 22 is managed on-demand by pumps 44, simplifying the setup and making it more adaptable for field use.

### References:

Anon: ELECTROSTATIC CLASSIFIER MODEL 3082 SCANNING MOBILITY PARTICLE SIZER TM (SMPS TM ) SPECTROMETER MODEL 3938 OPERATION AND SERVICE MANUAL P/N 6006760, REVISION C, 2016.
Anon: Fox, R. W., & McDonald, A. T. (2004). Introduction to Fluid Mechanics (6th ed.). Wiley., n.d.
Brunner, C. and Kanji, Z. A.: Continuous online monitoring of ice-nucleating particles: development of the automated Horizontal Ice Nucleation Chamber (HINC-Auto), Atmos Meas Tech, 14, 269-293, https://doi.org/10.5194/amt-14-269-2021, 2021.
Clegg, S. L., Qiu, C., and Zhang, R.: The deliquescence behaviour, solubilities, and densities of aqueous solutions of five methyl- and ethyl-aminium sulphate salts, Atmos Environ, 73, 145-158, https://doi.org/10.1016/j.atmosenv.2013.02.036, 2013.
Corrigan, C. E. and Novakov, T.: Cloud condensation nucleus activity of organic compounds: a laboratory study, Atmospheric Environment, 2661-2668 pp., 1999.
Cruz, C. N. and Pandis, S. N.: A study of the ability of pure secondary organic aerosol to act as cloud condensation nuclei, Atmos Environ, 31, 2205-2214, https://doi.org/https://doi.org/10.1016/S1352-2310(97)00054-X, 1997.
Cziczo, D. J., Nowak, J. B., Hu, J. H., and Abbatt, J. P. D.: Infrared spectroscopy of model tropospheric aerosols as a function of relative humidity: Observation of deliquescence and crystallization, Journal of Geophysical Research Atmospheres, 102, 18843-18850, https://doi.org/10.1029/97jd01361, 1997.
Davies, J. F., Zuend, A., and Wilson, K. R.: Technical note: The role of evolving surface tension in the formation of cloud droplets, Atmos Chem Phys, 19, 2933-2946, https://doi.org/10.5194/acp-19-2933-2019, 2019.
Hu, D., Topping, D., and McFiggans, G.: Measured particle water uptake enhanced by co-condensing vapours, Atmos Chem Phys, 18, 14925-14937, https://doi.org/10.5194/acp-18-14925-2018, 2018.
Hudson, J. G.: An Instantaneous CCN Spectrometer, J Atmos Ocean Technol, 6, 1055-1065, https://doi.org/https://doi.org/10.1175/1520-0426(1989)006<1055:AICS>2.0.CO;2, 1989.
Inc., A.: Solid185 Element Description, Ansys Manual, 2010.
Jiusto, J. E.: Aerosol and cloud microphysics measurements in Hawaii, Tellus, 19, 359-368, https://doi.org/10.3402/tellusa.v19i3.9805, 1967.
Kaaden, N., Massling, A., Schladitz, A., Müller, T., Kandler, K., Schütz, L., Weinzierl, B., Petzold, A., Tesche, M., Leinert, S., Deutscher, C., Ebert, M., Weinbruch, S., and Wiedensohler, A.: State of mixing, shape factor, number size distribution, and hygroscopic growth of the Saharan anthropogenic and mineral dust aerosol at Tinfou, Morocco, Tellus B Chem Phys Meteorol, 61, 51-63, https://doi.org/10.1111/j.1600-0889.2008.00388.x, 2009.
Knutson, E. O. and Wmtby, K. T.: AEROSOL CLASSIFICATION BY ELECTRIC MOBILITY" APPARATUS, THEORY, AND APPLICATIONS, • Aerosol Sci, Pergamon Press• Printed, 443-451 pp., 1975.
Köhler, H.: The nucleus in and the growth of hygroscopic droplets, Trans. Faraday Soc. , 32, 1152-1161, https://doi.org/10.1039/TF9363201152, 1936.
L., K., M., G., E., W., H., H., D.J., C., T., H., B., S., A., A., and U., B.: Subarctic atmospheric aerosol composition: 3. Measured and modeled properties of cloud condensation nuclei, Journal of Geophysical Research Atmospheres, 115, https://doi.org/10.1029/2009JD012447, 2010.
Lance, S., Medina, J., Smith, J., and Nenes, A.: Mapping the operation of the DMT continuous flow CCN counter, Aerosol Science and Technology, 40, 242-254, https://doi.org/10.1080/02786820500543290, 2006.
Lee, S. H., Murphy, D. M., Thomson, D. S., and Middlebrook, A. M.: Chemical components of single particles measured with Particle Analysis by Laser Mass Spectrometry (PALMS) during the Atlanta Supersite Project: Focus on organic/sulfate, lead, soot, and mineral particles, Journal of Geophysical Research Atmospheres, 107, https://doi.org/10.1029/2000jd000011, 2002.
Murphy, D. M., Cziczo, D. J., Froyd, K. D., Hudson, P. K., Matthew, B. M., Middlebrook, A. M., Peltier, R. E., Sullivan, A., Thomson, D. S., and Weber, R. J.: Single-peptide mass spectrometry of tropospheric aerosol particles, Journal of Geophysical Research Atmospheres, 111, https://doi.org/10.1029/2006JD007340, 2006.
Nenes, A., Chuang, P. Y., Flagan, R. C., and Seinfeld, J. H.: A theoretical analysis of cloud condensation nucleus (CCN) instruments, Journal of Geophysical Research Atmospheres, 106, 3449-3474, https://doi.org/10.1029/2000JD900614, 2001.
Ovadnevaite, J., Zuend, A., Laaksonen, A., Sanchez, K. J., Roberts, G., Ceburnis, D., Decesari, S., Rinaldi, M., Hodas, N., Facchini, M. C., Seinfeld, J. H., and O'Dowd, C.: Surface tension prevails over solute effect in organic-influenced cloud droplet activation, Nature, 546, 637-641, https://doi.org/10.1038/nature22806, 2017.
Pajunoja, A., Lambe, A. T., Hakala, J., Rastak, N., Cummings, M. J., Brogan, J. F., Hao, L., Paramonov, M., Hong, J., Prisle, N. L., Malila, J., Romakkaniemi, S., Lehtinen, K. E. J., Laaksonen, A., Kulmala, M., Massoli, P., Onasch, T. B., Donahue, N. M., Riipinen, I., Davidovits, P., Worsnop, D. R., Petäjä, T., and Virtanen, A.: Adsorptive uptake of water by semisolid secondary organic aerosols, Geophys Res Lett, 42, 3063-3068, https://doi.org/https://doi.org/10.1002/2015GL063142, 2015.
Pradeep Kumar, P., Broekhuizen, K., and Abbatt, J. P. D.: Organic acids as cloud condensation nuclei: Laboratory studies of highly soluble and insoluble species, Atmos Chem Phys, 3, 509-520, https://doi.org/10.5194/acp-3-509-2003, 2003.
Renbaum-Wolff, L., Song, M., Marcolli, C., Zhang, Y., Liu, P. F., Grayson, J. W., Geiger, F. M., Martin, S. T., and Bertram, A. K.: Observations and implications of liquid-liquid phase separation at high relative humidities in secondary organic material produced by α-pinene ozonolysis without inorganic salts, Atmos Chem Phys, 16, 7969-7979, https://doi.org/10.5194/acp-16-7969-2016, 2016.
Roberts, G. C. and Nenes, A.: A continuous-flow streamwise thermal-gradient CCN chamber for atmospheric measurements, Aerosol Science and Technology, 39, 206-221, https://doi.org/10.1080/027868290913988, 2005.
Rogers, D. C.: Development of a Continuous Flow Thermal Gradient Diffusion Chamber for Ice Nucleation Studies, Atmospheric Research, Elsevier Science Publishers B.V, 149-181 pp., 1988.
Romakkaniemi, S., Jaatinen, A., Laaksonen, A., Nenes, A., and Raatikainen, T.: Ammonium nitrate evaporation and nitric acid condensation in DMT CCN counters, Atmos Meas Tech, 7, 1377-1384, https://doi.org/10.5194/amt-7-1377-2014, 2014.
Stetzer, O., Baschek, B., Lüönd, F., and Lohmann, U.: The Zurich Ice Nucleation Chamber (ZINC) - A new instrument to investigate atmospheric ice formation, Aerosol Science and Technology, 42, 64-74, https://doi.org/10.1080/02786820701787944, 2008.
Topping, D., Connolly, P., and Mcfiggans, G.: Cloud droplet number enhanced by co-condensation of organic vapours, Nat Geosci, 6, 443-446, https://doi.org/10.1038/ngeo1809, 2013.
Topping, D. O. and McFiggans, G.: Tight coupling of particle size, number and composition in atmospheric cloud droplet activation, Atmos Chem Phys, 12, 3253-3260, https://doi.org/10.5194/acp-12-3253-2012, 2012.
Vargaftik, N. B., Volkov, B. N., and Voljak, L. D.: International Tables of the Surface Tension of Water, J Phys Chem Ref Data, 12, 817-820, https://doi.org/10.1063/1.555688, 1983.
Wexler, A. S. and Clegg, S. L.: Atmospheric aerosol models for systems including the ions H+, NH4+, Na+, so42-, NO 3-, Cl-, Br-, and H2O, Journal of Geophysical Research Atmospheres, 107, https://doi.org/10.1029/2001JD000451, 2002.
Whitehead, J. D., Irwin, M., Allan, J. D., Good, N., and McFiggans, G.: A meta-analysis of particle water uptake reconciliation studies, Atmos Chem Phys, 14, 11833-11841, https://doi.org/10.5194/acp-14-11833-2014, 2014.
Zelenyuk, A. and Imre, D.: On the effect of particle alignment in the DMA, Aerosol Science and Technology, 41, 112-124, https://doi.org/10.1080/02786820601118380, 2007.
Zelenyuk, A., Cai, Y., and Imre, D.: From Agglomerates of Spheres to Irregularly Shaped Particles: Determination of Dynamic Shape Factors from Measurements of Mobility and Vacuum Aerodynamic Diameters, Aerosol Science and Technology, 40, 197-217, https://doi.org/10.1080/02786820500529406, 2006.

### LIST OF REFERENCE SIGNS

- 1: device
- 2: chamber
- 3, 3a, ...: sample inlet
- 4: sample outlet
- 5: detection device
- 6: vapor source
- 7: sample flow
- 8: vaporizing fluid
- 9: first wall element
- 10: second wall element
- 11: outer surface of first wall element
- 12: outer surface of second wall element
- 13: inner surface of first wall element
- 14: inner surface of second wall element
- 15: cavity of first wall element
- 16: cavity of second wall element
- 17: temperature regulating fluid
- 18: fluid inlet of first wall element
- 19: fluid outlet of first wall element
- 20: interior of chamber
- 21: fluid distributing element
- 22: fluid distributing element
- 23: channel
- 24: drainage port
- 25: spacer element
- 26: injector device
- 27: fluid port of first wall element
- 28: fluid port of second wall element
- 29: fluid distribution element
- 30: fluid distribution element
- 31: internal diameter of fluid distribution element
- 32: sheath inlet
- 33: sheath fluid flow
- 34: sheath outlet
- 35: proximal end region
- 36: distal end region
- 37: mesh element
- 38: heat sink element
- 39: sample supplying device
- 40: drying device
- 41: particle sizer
- 42: temperature regulating fluid supplying device
- 43: sheath fluid supplying device
- 44: pumping device
- 45: particle/aerosol counter
- 46: side surface of second wall element
- 47: mass flow controller
- 48: mass flow controller
- 49: filter device
- 50: pumping device
- 51: valve

- 100: arrangement

- Lc: longitudinal direction of chamber
- Vc: vertical direction of chamber
- I: inlet direction of sample flow
- J: injection direction
- Dt: direction
- Ds: sheath flowing direction

## Claims

1. A device (1) for detecting a cloud condensation nuclei activation of aerosol particles of a sample flow comprising:
- a chamber (2) defining a longitudinal direction (Lc) and comprising at least one sample inlet (3) for receiving a sample flow (7) comprising aerosol particles and at least one sample outlet (4) for expelling the sample flow (7) from the chamber (2),
- a vapor source (6) being configured to generate a supersaturation of vapor from a vaporizing fluid (8) in the chamber (2), whereby aerosol particles are activatable to become cloud condensation nuclei and, from the cloud condensation nuclei, droplets are generatable,
wherein the vapor source (6) comprises at least a first wall element (9) and a second wall element (10) being arranged opposite to one another with respect to a vertical direction (Vc) of the chamber (2) running perpendicularly to the longitudinal direction (Lc) of the chamber (2), and
- a detection device (5) configured to detect aerosol particles and droplets being expelled through the sample outlet (4),
**characterized in that** the first wall element (9) and the second wall element (10) in each case comprise a cavity (15; 16),
wherein the cavity (15) of the first wall element (9) and the cavity (16) of the second wall element (10) are in each case configured to receive a temperature regulating fluid (17) for regulating a temperature of the first wall element (9) and a temperature of the second wall element (10), respectively,
whereby a temperature gradient between the first wall element (9) and the second wall element (10) and the supersaturation of the vaporizing fluid in the chamber (2) is generatable to activate the aerosol particles.

2. The device (1) according to claim 1, wherein the first wall element (9) comprises at least one fluid inlet (18) for receiving the vaporizing fluid (8) and at least one fluid outlet (19) for supplying the vaporizing fluid (8) towards an interior (20) of the chamber (2),
the fluid inlet (18) of the first wall element (9) preferably being provided on an outer surface (11) of the first wall element (9) and/or the fluid outlet (19) of the first wall element (9) preferably being provided on an inner surface (13) of the first wall element (9).

3. The device (1) according to claim 1 or 2, wherein an inner surface (13) of the first wall element (9) and an inner surface (14) of the second wall element (10) comprise in each case at least one fluid distributing element (21; 22), and wherein at least one of:
- the fluid distributing elements (21; 22) are configured to distribute the vaporizing fluid (8) at least partially along the inner surface (13; 14) of the first wall element (9) and of the second wall element (10), respectively,
- the fluid distributing elements (21; 22) are in direct contact with the inner surfaces (13; 14) and/or are configured to wet the inner surfaces (13; 14) of the first wall element (9) and of the second wall element (10), respectively, or
- the fluid distributing elements (21; 22) are at least one of: a filter paper, a filter membrane, or a filter sheet.

4. The device (1) according to any one of the preceding claims, wherein the first wall element (9) and the second wall element (10) are integral parts of the chamber (2) and/or at least partially delimit the chamber (2), and/or
wherein the second wall element (10) comprises at least one channel (23) configured to collect and/or remove excess vaporizing fluid (8) from the chamber (2) preferably via at least one drainage port (24), the channel (23) preferably being provided on the inner surface (14) of the second wall element (10) and/or the drainage port (24) preferably being provided on the outer surface (12) and/or a side surface (46) of the second wall element (10).

5. The device (1) according to any one of the preceding claims, further comprising a spacer element (25) being arranged between the first wall element (9) and the second wall element (10) with respect to the vertical direction (Vc) of the chamber (2), and wherein at least one of:
- the spacer element (25) is an integral part of the chamber (2) and/or partially delimits the chamber (2),
- the spacer element (25) thermally insulates the first wall element (9) and the second wall element (10) from one another, or
- the sample inlet (3) and/or the sample outlet (4) are provided in the spacer element (25).

6. The device (1) according to any one of the preceding claims, wherein the sample inlet (3) is arranged and/or configured to supply the sample flow (7) along an inlet direction (I) running perpendicularly to the longitudinal direction (Lc) and/or to the vertical direction (Vc) of the chamber (2), and/or
wherein two or more sample inlets (3, 3a, ...) are provided at a distance from one another such that the sample flow (7) is injectable into the chamber (2) at different locations preferably with respect to the longitudinal direction (Lc) of the chamber (2), and/or
wherein at least one injector device (26) configured to inject the sample flow (7) along an injection direction (J) is at least partially arrangeable in the sample inlet (3), the injector device (26) preferably being removably arranged in the sample inlet (3).

7. The device (1) according to any one of the preceding claims, wherein the first wall element (9) and the second wall element (10) in each case comprises one or more fluid ports (27; 28) being in fluid connection with the cavity (15; 16) and being configured to supply the temperature regulating fluid (17) into the cavity (15; 16) of the first wall element (9) and of the second wall element (10), respectively, and/or
further comprising at least one fluid distribution element (29; 30) being configured to distribute the temperature regulating fluid (17) into the cavity (15; 16) of the first wall element (9) and/or of the second wall element (10), and
wherein the fluid distribution element (29; 30) preferably is a manifold being configured to distribute the temperature regulating fluid (17) among two or more fluid ports (27:28) of the first wall element (9) and/or of the second wall element (10), and/or
wherein an internal diameter (31) of the fluid distribution element (29; 30) preferably decreases along a direction (Dt) along which the temperature regulating fluid (17) is flowable when being distributed into the cavity (15, 16) of the first wall element (9) and/or of the second wall element (10).

8. The device (1) according to any one of the preceding claims, wherein the chamber (2) comprises at least one sheath inlet (32) for receiving at least one sheath fluid flow (33) and at least one sheath outlet (34) for expelling the sheath fluid flow (33) from the chamber (2), and wherein at least one of:
- the sheath inlet (32) and the sheath outlet (34) are arranged such that the sheath fluid flow (33) is flowable within the chamber (2) along a sheath flowing direction (Ds) being parallel to the longitudinal direction (Lc) of the chamber (2),
- the sheath inlet (32) is arranged in a proximal end region (35) of the chamber (2) and the sheath outlet (34) is arranged in a distal end region (36) of the chamber (2), or
- the chamber (2) comprises at least one mesh element (37) through which the sheath fluid flow (33) is flowable after being received in the chamber (2) through the sheath inlet (32), and wherein the mesh element (37) is configured to control and/or direct a sheath flowing direction (Ds) of the sheath fluid flow (33), and/or
wherein the device (1) preferably comprises at least one heat sink element (38) being configured to dissipate heat from the sheath fluid flow (33), the sheath inlet (32) preferably being configured such that the sheath fluid flow (33) is directed to the heat sink element (38).

9. The device (1) according to any one of the preceding claims, further comprising at least one tilting device being configured to tilt the device along at least one tilting axis preferably running parallel to the longitudinal direction (Lc) of the chamber (2) in a non-tilted state of the device (1) and/or running parallel to a transverse direction of the chamber (2) running perpendicularly to the longitudinal direction (Lc) of the chamber (2) and the vertical direction of the chamber (Vc) in a non-tilted state of the device (1), and
wherein the tilting device is configured to tilt the device (1) such that the vaporizing fluid (8) is distributed across the first and second wall elements (9; 10), in particular across the inner surfaces (13; 14) of the first and second wall element (9; 10) and/or across the fluid distributing elements (21; 22), and/or
wherein the tilting device comprises an actuator, in particular a linear actuator.

10. The device (1) according to any one of the preceding claims, wherein the sample outlet (4) is provided in a distal end region (36) of the chamber (2), and wherein a shape of the distal end region (36) of the chamber (2) is configured to focus the sample flow (7) being expelled from the sample outlet (4) towards the detection device (5), and/or
wherein the device (1) further comprises at least one shielding element being arranged between the sample outlet (4) and the detection device (5) and being configured to shield the sample flow (7) being expelled from the sample outlet (4).

11. A method of manufacturing a device (1) for detecting a cloud condensation nuclei activation of aerosol particles of a sample flow, preferably the device (1) as claimed in any one of the preceding claims, the method comprising:
- Providing a chamber (2) defining a longitudinal direction (Lc) and comprising at least one sample inlet (3) for receiving a sample flow (7) comprising aerosol particles and at least one sample outlet (4) for expelling the sample flow from the chamber (2),
- Providing a vapor source (6) being configured to generate a supersaturation of vapor from a vaporizing fluid (8) in the chamber (2), whereby aerosol particles are activatable to become cloud condensation nuclei and, from the cloud condensation nuclei, droplets are generatable,
wherein the vapor source (6) comprises at least a first wall element (9) and a second wall element (10) being arranged opposite to one another with respect to a vertical direction (Vc) of the chamber (2) running perpendicularly to the longitudinal direction (Lc) of the chamber (2), and
- Providing a detection device (5) configured to detect aerosol particles and droplets being expelled through the sample outlet (4),
**characterized in that** the first wall element (9) and the second wall element (10) in each case comprise a cavity (15; 16),
wherein the cavity (15) of the first wall element (9) and the cavity (16) of the second wall element (10) are in each case configured to receive a temperature regulating fluid (17) for regulating a temperature of the first wall element (9) and a temperature of the second wall element (10), respectively,
whereby a temperature gradient between the first wall element (9) and the second wall element (10) and the supersaturation of the vaporizing fluid in the chamber (2) is generatable to activate the aerosol particles.

12. An arrangement (100) for detecting a cloud condensation nuclei activation of aerosol particles of a sample flow (7) comprising:
- at least one device (1) as claimed in any one of claims 1 to 10 and/or as manufactured in the method according to claim 11, and
- at least one of: a sample supplying device (39), a drying device (40), a particle sizer (41), a temperature regulating fluid supplying device (42) and/or a particle/aerosol counter (45) and/or a sheath fluid supplying device (43) being in communication with the device (1) and/or with one another.

13. A method of detecting cloud condensation nuclei activation of aerosol particles of a sample flow (7) using the device (1) as claimed in any one of claims 1 to 10 and/or as manufactured in the method according to claim 11 and/or using the arrangement (100) as claimed in claim 12, the method comprising the steps of:
- Injecting a sample flow (7) comprising aerosol particles through the sample inlet (3) into the chamber (2),
- Supplying a vaporizing fluid (8) towards an interior (20) of the chamber (2), preferably to the fluid distribution element (21) of the first wall element (9) and the fluid distribution element (22) of the second wall element (10),
- Supplying a temperature regulating fluid (17) into the cavity (15) of the first wall element (9) and the cavity (16) of the second wall element (10) such, that a temperature gradient between the first wall element (9) and the second wall element (10) is generated, whereby the supersaturation of the vaporizing fluid in the chamber (2) is generated, and whereby at least some of the aerosol particles are activated and become cloud condensation nuclei that grow into droplets, and
- Detecting the droplets and/or the aerosol particles being expelled through the sample outlet (4) with the detection device (5).

14. The method according to claim 13 or 14, wherein at least one of:
- a temperature of the first wall element (9) is higher than a temperature of the second wall element (10),
- a linear temperature gradient between the first wall element (9) and the second wall element (10) is generated with respect to the vertical direction (Vc) of the chamber (2),
- the temperature regulating fluid (17) comprises or consists of at least one of ethanol, propylene glycol, ethylene glycol, glycerin, water with silicone oil, mineral oil, perfluorinated compounds, or perfluorocyclohexane,
- the sample flow (7) comprises or consists of an aerosolized solution and/or an ambient aerosol,
- the vaporizing fluid (8) comprises or consists of water, or with any diluted solution with water,
- the device (1) is tilted with a tilting device after the vaporizing fluid (8) has been supplied and before the sample flow (7) is injected.

15. The method according to any one of claims 13 to 14, wherein a sheath fluid flow (33) is injected into the chamber (2) through the sheath inlet (32), and wherein at least one of:
- the sheath fluid flow (33) corresponds to a dry sheath fluid flow,
- the sample flow (7) is flowing within the sheath fluid flow (33) when seen along the longitudinal direction (Lc) of the chamber (2),
- a flow rate of the sheath fluid flow (33) is higher than a flow rate of the sample flow (7), or
- a total flow of the sample flow (7) and the sheath fluid flow (33) is in the laminar regime.
